# EUROPÄISCHE PATENTSCHRIFT

(11) **EP 2 587 295 B1**
(45) Veröffentlichungstag und Bekanntmachung des Hinweises auf die Patenterteilung: **01.04.2020**
(21) Anmeldenummer: 12185896.3
(22) Anmeldetag: 25.09.2012
(51) Int. Cl.: G02B 21/08, G02B 21/10, G02B 21/36, G02B 21/00, G02B 21/16

(54) **Verfahren und Anordnung zur Beleuchtung einer Probe**
Method and device for illuminating a sample
Procédé et agencement destinés à l'éclairage d'un échantillon

(30) Priorität: 28.10.2011 DE 102011054914
(43) Veröffentlichungstag der Anmeldung: 01.05.2013
(73) Patentinhaber: Leica Microsystems CMS GmbH, 35578 Wetzlar (DE)
(72) Erfinder: Knebel, Werner, 76709 Kronau (DE); Sieckmann, Frank, 75031 Eppingen-Elsenz (DE)
(74) Vertreter: Hoffmann, Jürgen

(56) Entgegenhaltungen:
- WO-A1-2010/012980
- DE-A1- 19 632 040
- DE-A1- 19 834 279
- DE-A1-102004 034 957
- DE-A1-102008 018 476
- SWOGER JIM ET AL: "A confocal fiber-coupled single-lens theta microscope", REVIEW OF SCIENTIFIC INSTRUMENTS, AIP, MELVILLE, NY, US, Bd. 69, Nr. 8, 1. August 1998 (1998-08-01) , Seiten 2956-2963, XP012036717, ISSN: 0034-6748, DOI: 10.1063/1.1149040
- MIKE FRIEDRICH ET AL: "STED-SPIM: Stimulated Emission Depletion Improves Sheet Illumination Microscopy Resolution", BIOPHYSICAL JOURNAL, BIOPHYSICAL SOCIETY, US, Bd. 100, Nr. 8, 29. Dezember 2010 (2010-12-29), Seiten L43-L45, XP028192802, ISSN: 0006-3495, DOI: 10.1016/J.BPJ.2010.12.3748 [gefunden am 2011-03-09]

## Beschreibung

Die vorliegende Erfindung betrifft ein Verfahren zum Beleuchten einer Probe bei der SPIM-Mikroskopie, beinhaltend folgende Schritte: Erzeugen eines Lichtbündels und Erzeugen eines Lichtstreifens aus dem Lichtbündel mit einem mit dem Lichtbündel in Wechselwirkung tretenden optischen Mittel.

Die Erfindung betrifft außerdem eine Vorrichtung zum Beleuchten einer Probe bei der SPIM- Mikroskopie mit einer Lichtquelle zum Erzeugen eines Lichtbündels, mit Mitteln zum Erzeugen eines Lichtstreifens aus dem Lichtbündel zum im Wesentlichen flächenartigen Beleuchten einer Probe in einer Beleuchtungsebene aus wenigstens einer Richtung, und mit wenigstens einem Objektiv, das eine Optik aufweist.

Außerdem betrifft die Erfindung ein Mikroskop, insbesondere ein Scanmikroskop und/oder konfokales Scanmikroskop, und einen Experimentaufbau zum mikroskopischen Abbilden einer Probe mit einer solchen Vorrichtung und zur Durchführung eines solchen Verfahrens.

Das eingangs genannte und dieser Erfindung zugrundeliegende SPIM-Verfahren (Selective Plane Illumination Microscope) ist aus dem Stand der Technik bekannt und beispielsweise in Lindek et al; Journal of modern optics, 1999, vol. 46, no. 5, 843-858 beschrieben.

Ein nach dem SPIM-Verfahren arbeitendes Mikroskop ist in DE 102 57 423 A1 beschrieben. Bei diesem Mikroskop wird eine Probe mit einem dünnen Lichtstreifen beleuchtet, während die Beobachtung senkrecht zu der Ebene des beleuchtenden Lichtstreifens erfolgt. Hierbei erfolgen die Beleuchtung und die Detektion über zwei separate optische Strahlengänge mit jeweils separater Optik, insbesondere mit zwei separaten, zueinander senkrechten Objektiven. Der Lichtstreifen wird von Beleuchtungsobjektiv und einer ihm vorgeschalteten Zylinderoptik erzeugt. Für die Bildaufnahme wird die Probe durch den bezüglich des Detektors feststehenden Lichtstreifen bewegt, um schichtweise Fluoreszenz- und/oder Streulicht mit einem flächigen Detektor aufzunehmen. Die so gewonnenen Schichtbilddaten lassen sich anschließend zu einem einer dreidimensionalen Abbildung der Probe entsprechenden Datensatz zusammensetzen. Um einen möglichst dünnen Lichtstreifen zu erzeugen, muss das Beleuchtungsobjektiv eine entsprechend hohe numerische Apertur aufweisen, wobei der freie Arbeitsabstand des Beleuchtungsobjektivs entsprechend groß sein muss, um eine Kollision mit dem Beobachtungsobjektiv zu vermeiden. Eine derartige senkrechte Anordnung der beiden Objektive kann bei der Abbildung bestimmter, insbesondere biologischer, Proben von Nachteil sein. Beispielsweise ist es häufig nicht möglich, sphärische Objekte unter einer rechtwinkligen Objektivanordnung kollisionsfrei zu platzieren. Neben den äußerst hohen Anforderungen an die Probenpräparation, kommt es zudem auch häufig zu unerwünschten Abschattungen in der Probe.

Bei einem in WO 2010/012980 A1 beschriebenen abgewandelten SPIM-Verfahren erfolgen Beleuchtung und Detektion mit ein und demselben Objektiv. Hierzu wird die Eintrittspupille des Objektivs dezentral unterleuchtet, d.h. der Beleuchtungsstrahl tritt durch einen Teil der Eintrittspupille, der quer zur optischen Achse versetzt ist. Eine vor dem Objektiv angeordnete Zylinderlinse erzeugt in der Probe ein Lichtblatt, dass zur optischen Achse des Objektivs schräg gestellt ist. Der durch dieses Lichtblatt beleuchtete Bereich der Probe wird dann wiederum durch das Objektiv auf einen Detektor abgebildet. Allerdings ist diese Vorrichtung ausschließlich für eine Schrägbeleuchtung der Probe mit einem Lichtblatt ausgelegt und ermöglicht keine davon abweichende Anwendung, insbesondere keine punktweise konfokale Abtastung der Probe oder eine Variation der räumlichen Lichtintensitätsverteilung des Lichtblatts und insbesondere mit einem senkrecht zur optischen Achse des Objektivs ausgerichteten Lichtstreifen.

Aus DE 10 2004 034 957 A1 ist eine Anordnung zur mikroskopischen Beobachtung einer Probe über ein Mikroskopobjektiv bekannt, in dessen Gehäuse außerhalb der Linsenoptik Lichtführungen für das Beleuchtungslicht der Probe vorgesehen sind. Das Beleuchtungslicht verläuft dabei zunächst parallel zur optischen Achse des Objektivs innerhalb der Lichtführung und trifft danach auf am Objektivgehäuse angebrachte Reflektoren mit geringer Apertur, die das Beleuchtungslicht mit Hilfe zusätzlicher Abbildungselemente senkrecht zur optischen Achse des Mikroskopobjektivs und damit senkrecht zur Beobachtungsrichtung in die Probe fokussieren. Auch hier erfolgt die Beleuchtung der Probe flächenartig nach dem SPIM-Prinzip. Durch Verwenden eines derart ausgebildeten Mikroskopobjektivs kann zwar auch auf den Einsatz eines weiteren Objektives für das Beleuchtungslicht verzichtet werden. Allerdings ist die spezielle Ausgestaltung dieses Spezial-Objektivs mit zusätzlichen Lichtführungen und Reflektoren technisch sehr aufwendig und teuer.

Aufgabe der vorliegenden Erfindung ist es, die zuvor genannten Verfahren und Vorrichtungen zum Beleuchten einer Probe in der SPIM-Mikroskopie dahingehend zu verbessern, dass eine schnell einstellbare und darüber hinaus zuverlässig und vielseitig einsetzbare, flächenartige, insbesondere zur Beobachtungsrichtung orthogonale, Beleuchtung der Probe ermöglich ist, wobei vorzugsweise viele ohnehin an einem Mikroskop, insbesondere Scanmikroskop, vorhandene Bauteile verwendbar sind.

Diese Aufgabe wird gelöst durch ein Verfahren zum Beleuchten einer Probe gemäß Anspruch 1 und einer Vorrichtung zum Beleuchten einer Probe gemäß Anspruch 9. Vorteilhafte Ausgestaltungen der Erfindung sind Gegenstände der Unteransprüche.

Demgemäß sieht die Erfindung ein Verfahren zum Beleuchten einer Probe in der SPIM-Mikroskopie vor, das folgende Schritte aufweist:
a. Erzeugen eines Lichtbündels,
b. Erzeugen eines Lichtstreifens aus dem Lichtbündel mit einem mit dem Lichtbündel in Wechselwirkung tretenden optischen Mittel,
c. Führen des Lichtstreifens durch wenigstens ein Objektiv, das eine Optik aufweist, die dazu ausgebildet und bestimmt ist, von der Probe ausgehendes Detektionslicht direkt oder indirekt einem Detektor zuzuführen, wobei die Optik des Objektivs mit dem Lichtstreifen in Wechselwirkung tritt, und
d. Umlenken des Lichtstreifens mit einer der Optik des Objektivs nachgeschalteten Umlenkvorrichtung derart, dass sich der Lichtstreifen nach dem Umlenken zum Beleuchten der Probe in einem von Null Grad verschiedenen Winkel, insbesondere einem rechten Winkel, zur optischen Achse des Objektivs ausbreitet und vorzugsweise in der Probe fokussiert ist.

Außerdem sieht die Erfindung eine Vorrichtung vor
a. mit einer Lichtquelle zum Erzeugen eines Lichtbündels,
b. mit Mitteln zum Erzeugen eines Lichtstreifens aus dem Lichtbündel, insbesondere zum im Wesentlichen flächenartigen Beleuchten einer Probe in einer Beleuchtungsebene aus wenigstens einer Richtung,
c. mit wenigstens einem Objektiv, das eine Optik aufweist, die dazu ausgebildet und bestimmt ist, von der Probe ausgehendes Detektionslicht direkt oder indirekt einem Detektor zuzuführen, wobei die Optik des Objektivs mit dem Lichtstreifen in Wechselwirkung tritt,
d. und mit einer der Optik des Objektivs nachgeschalteten Umlenkvorrichtung zum Umlenken des Lichtstreifens, wobei sich der Lichtstreifen nach dem Umlenken zum Beleuchten einer Probe in einem von Null Grad verschiedenen Winkel, insbesondere einem rechten Winkel, zur optischen Achse des Objektivs ausbreitet und/oder in einer optischen Achse des Objektivs nicht parallelen Ebene angeordnet ist.

Erfindungsgemäß wurde erkannt, dass zum Beleuchten einer Probe nach dem SPIM-Verfahren, insbesondere zum flächenartigen Beleuchten in einer zur Beobachtungsrichtung senkrechten Ebene, im Wesentlichen ein herkömmliches Mikroskopobjektiv ohne zusätzliche Optik innerhalb des Mikroskopgehäuses verwendet werden kann, wobei das Beleuchtungslicht durch die Objektivoptik hindurch geht und anschließend mit einer Umlenkeinrichtung unter einem von Null Grad verschiedenen Winkel, insbesondere einem rechten Winkel, zur optischen Achse des Objektivs in die Probe fokussiert werden kann.

Zum Erzeugen des Lichtbündels für die Probenbeleuchtung sind gemäß der Erfindung in der Mikroskopie übliche und bekannte Lichtquellen, wie beispielsweise CW-Laser oder gepulste Laser, vorgesehen.

Das nach dem erfindungsgemäßen Verfahren und der erfindungsgemäßen Vorrichtung vorgesehene optische Mittel zum Erzeugen des Lichtstreifens kann gemäß einer vorteilhaften Ausgestaltung der Erfindung eine Strahlablenkvorrichtung aufweisen, mit der das Lichtbündel vorzugsweise derart schnell in einer Beleuchtungsebene bewegbar ist, dass de facto in der Beleuchtungsebene ein Lichtstreifen vorliegt und/oder dass diese Beleuchtung mit den zur Detektion des von der Probe ausgehenden Lichtes vorgesehenen Detektoren und den nachgeschalteten Auswertevorrichtungen eines Mikroskops nicht von einem kontinuierlichen Lichtstreifen unterscheidbar ist und/oder dass die aufgenommenen Bilddaten sich nicht oder nicht Wesentlich von den Daten unterscheiden, die bei einer Beleuchtung einem kontinuierlichen Lichtstreifen erzeugt würden.

Insbesondere kann vorgesehen sein, dass die durch die Strahlablenkvorrichtung bewirkte Schwenkbewegung des Lichtbündels dazu genutzt wird, den Fokus innerhalb der Probe zu bewegen und somit einen fokussierten Lichtstreifen zum flächigen Beleuchten der Probe aus einer bestimmten Richtung zu erzeugen. Dies kann beispielsweise dadurch erreicht werden, dass das Lichtbündel von der Strahlablenkvorrichtung vor dem Objektiv mit einer ausreichend schnellen Geschwindigkeit hin und her verkippt wird, so dass die resultierende Oszillationsbewegung des fokussierten Lichtbündels zeitgemittelt zu einer scheibenartigen bzw. flächigen Lichtverteilung in einer Beleuchtungsebene innerhalb der Probe führt.

Die Strahlablenkvorrichtung lenkt das Lichtbündel vorzugsweise derart ab, dass das Lichtbündel im Bereich der Eintrittspupille des Objektivs näherungsweise ortsfest an einem Kipppunkt bleibt, während das Lichtbündel in einem Abstand von der Eintrittspupille in Richtung der Strahlablenkvorrichtung eine Schwenkbewegung relativ zu einer parallel zur optischen Achse des Objektivs liegenden Referenzrichtung ausführt. Diese Schwenkbewegung des Lichtbündels setzt das Objektiv und die nachgeschaltete Umlenkeinrichtung in eine entsprechende Bewegung des unter anderem durch das Objektiv erzeugten Fokus des Lichtbündels um. Für die Mikroskopie wird die Probe vorzugsweise in diesem Fokus positioniert. Die tatsächliche Größe des Fokus und die Amplitude der Fokusbewegung in der Probe hängen dabei vom konkreten Aufbau der Optik des Objektivs und eventuell zusätzlich verwendeter optischer Elemente im Strahlengang ab.

In besonders geeigneter und technisch einfach zu realisierender Weise kann die Strahlablenkvorrichtung wenigstens einen Drehspiegel und/oder einen Kippspiegel, vorzugsweise einen Galvanometerspiegel, und/oder ein drehbares Prisma und/oder eine verschiebbare Linse und/oder akusto-optischen Deflektor aufweisen. Insbesondere kann es sich bei der Strahlablenkvorrichtung um die - ggf. ohnehin vorhandene - Strahlablenkvorrichtung eines Scanmikroskops oder eines konfokalen Scanmikroskops handeln.

Zusätzlich zu oder anstelle der Strahlablenkvorrichtung kann nach einer weiteren Ausführungsform der Erfindung eine Zylinderoptik als optisches Mittel zum Erzeugen des Lichtstreifens vorgesehen sein.

Nach einer weiteren, vorteilhaften Ausgestaltung der Erfindung ist vorgesehen, dass die Form und/oder die Position und/oder die Orientierung des Lichtstreifens, insbesondere mit den zuvor beschriebenem optischen Mittel und/oder dem Objektiv und/oder der Umlenkeinrichtung eingestellt werden bzw. einstellbar sind.

Die Position und/oder Ausrichtung des Lichtstreifens lässt sich eine Schwenkbewegung mittels einer Strahlablenkeinrichtung einstellen. Die Form, insbesondere die Breite, des Lichtstreifens kann beispielsweise durch Auswahl verschiedener Oszillationsamplituden der Schwenkbewegung eingestellt werden.

Bei einer besonderen Ausführungsform ist vorgesehen, dass der Strahlengang des Lichtbündels und/oder des Lichtstreifens und/oder des Detektionslichts der Art aufeinander abgestimmt werden, dass der Lichtstreifen an einem zu beobachtenden Probenort einen Fokus aufweist und dass von dem Probenort ausgehen des Detektionslicht auf dem Detektor einen der Detektionsfokus aufweist.

Vorzugsweise befindet sich der Detektor in einer zur Detektionsebene korrespondierenden Ebene. Die Position und die Orientierung der Detektionsebene ist im Wesentlichen von der Art, der Orientierung und der Position des Objektivs, der Position des Detektors und der gegebenenfalls zwischen Detektor und Objektiv angeordneten weiteren optischen Bauteile abhängig. Vorzugsweise wird der Lichtstreifen der Art positioniert und ausgerichtet, dass er nach der Umlenkung in der Detektionsebene angeordnet ist.

Wenn sowohl die Beleuchtung, als auch die Detektion durch das Objektiv hindurch erfolgt ist zu beachten, dass der Lichtweg des Lichtstreifens von der Pupille des Objektivs bis zu seinem Fokus - insbesondere aufgrund der Umlenkung - in aller Regel länger ist, als der Lichtweg des Direktionslichts, das direkt - ausgehend von dem mittels des Fokus des Lichtstreifens beleuchteten Probenbereichs und direkt durch das Objektiv tretend - zur Objektivpupille gelangt. Dieser Weglängenunterschied kann beispielsweise dadurch ausgeglichen werden, dass das Lichtbündel nicht als paralleles Lichtbündel, sondern als divergentes Lichtbündel zum Objektiv gelangt. Eine Divergenz kann beispielsweise mithilfe einer zusätzlichen Optik, die ausschließlich auf das Lichtbündel, nicht jedoch auf das der Detektionslicht wirkt, erreicht werden. Alternativ kann der Weglängenunterschied natürlich auch dadurch ausgeglichen werden, dass der Detektionsstrahlengang entsprechend verlängert wird. Selbstverständlich ist natürlich auch eine Kombination aus beiden Maßnahmen grundsätzlich möglich.

Darüber hinaus kann die Form des Lichtstreifens vorteilhaft dadurch variiert werden, dass die Eintrittspupille des Objektivs von dem Lichtbündel unterleuchtet wird, indem das Lichtbündel nicht die gesamte Fläche der Eintrittspupille durchsetzt und damit nicht die volle Apertur des Objektivs ausnutzt. Dieses Unterleuchten bewirkt eine Ausweitung des Fokus des Lichtbündels sowohl in Längsrichtung als auch in Querrichtung.

Außerdem kann die Strahlablenkvorrichtung beispielsweise dazu verwendet werden, das Lichtbündel an verschiedenen Orten, insbesondere dezentral auf die Eintrittspupille zu führen. Auf diese Weise wird erreicht, dass sich die Orientierung des fokussierten Lichtbündels bzw. des Lichtstreifens nach dem Objektiv und damit auch die Orientierung des Lichtbündels bzw. des Lichtstreifens in der Probe gemäß einer vorteilhaften Ausführung der Erfindung ändern.

Für die Erfindung ist von wesentlicher Bedeutung, dass die Optik des Objektivs mit dem Lichtbündel bzw. des Lichtstreifens in Wechselwirkung tritt, wobei die Optik des Objektivs auch dazu ausgebildet und bestimmt ist, von der Probe ausgehendes Detektionslicht direkt oder indirekt einem Detektor, beispielsweise einer CCD-Kamera (Charged Coupled Device) zuzuführen.

Nach einer weiteren vorteilhaften Ausgestaltung der Erfindung kann aber auch ein weiteres Objektiv und/oder eine Kondensoroptik zum direkten oder indirekten Zuführen des von der Probe ausgehenden Detektionslichts an den Detektor verwendet werden. Dazu können das weitere Objektiv und/oder die Kondensoroptik dem Objektiv gegenüberliegend entlang dessen optischer Achse angeordnet sein, während sich die Probe dazwischen befindet.

Erfindungsgemäß ist eine der Optik des Objektivs nachgeschaltete Umlenkvorrichtung vorgesehen, die dazu dient, den Lichtstreifen derart abzulenken, dass er sich nach dem Umlenken zum Beleuchten der Probe in einem von Null Grad verschiedenen Winkel, insbesondere einem rechten Winkel, zur optischen Achse des Objektivs ausbreitet und vorzugsweise in der Probe fokussiert ist. Die Umlenkvorrichtung kann, unabhängig von Art und Ort ihrer Befestigung, dem Objektiv derart nachgeschaltet sein, dass der Lichtstreifen nach dem Verlassen des Objektivs unmittelbar auf die Umlenkvorrichtung trifft. Es kann alternativ auch vorgesehen sein, dass die Umlenkvorrichtung dem Objektiv derart nachgeschaltet ist, dass der Lichtstreifen nach dem Verlassen des Objektivs zunächst mit einem anderen optischen Bauteil oder einem zwischengeschalteten optischen Medium in Wechselwirkung tritt, bevor er auf die Umlenkvorrichtung trifft.

Nach einer vorteilhaften Ausführung der Erfindung kann die Umlenkvorrichtung an dem Objektiv und/oder dem weiteren Objektiv und/oder an der Kondensoroptik festgelegt werden bzw. festgelegt sein. Insbesondere kann die Umlenkvorrichtung an den zuvor genannten Bauteilen gegen die Kraft eines elastischen Elements, insbesondere gegen eine Feder, insbesondere in einem von 90° verschiedenen Winkel gegenüber der optischen Achse des Objektivs, verschiebbar gehalten sein.

Als technisch besonders leicht zu realisierende Verbindung zum Festlegen der Umlenkvorrichtung ist eine Schraubverbindung denkbar. Dazu kann beispielsweise der Kopf des Objektivs, d.h. die der Probe zugewandte Seite des Objektivs, ein auf die optische Achse des Objektivs zentriertes Außengewinde aufweisen, das mit einem korrespondierten Innengewinde an der Umlenkvorrichtung in Verbindung gebracht werden kann.

Daran angelehnt ergibt sich eine weitere vorteilhafte Ausführung der Erfindung, die dadurch gekennzeichnet ist, dass die Umlenkeinrichtung wieder lösbare, vorzugsweise manuell lösbare, Verbindungsmittel aufweist, derart, dass die Umlenkvorrichtung als Nachrüstbauteil an das Objektiv und/oder an ein anderes konventionelles Objektiv festgelegt werden kann. Auf diese Weise lässt sich auch ein Austausch verschiedenartig ausgebildeter Umlenkeinrichtungen erreichen.

Alternativ kann wenigstens ein Bauteil der Umlenkvorrichtung mit einem Bauteil des Objektivs oder einem Bauteil des weiteren Objektivs oder einem Bauteil der Kondensoroptik einstückig hergestellt sein.

Nach einer vorteilhaften Ausgestaltung der Erfindung weist die Umlenkvorrichtung zum Umlenken des Lichtstreifens wenigstens eine zumindest teilweise reflektierende Fläche aufweist. Dazu kann die reflektierende Fläche beispielsweise als Teil eines planen Spiegels ausgebildet sein.

Zur Vermeidung von Abschattungen in der Probe kann es weiterhin von Vorteil sein, wenn die Probe mithilfe der Umlenkvorrichtung und/oder den optischen Mitteln zum Erzeugen des Lichtstreifens aus wenigstens zwei Richtungen mit des Lichtstreifens beleuchtet wird, wobei der Lichtstreifen vorzugsweise aus jeder der wenigstens zwei Richtungen in einem einzigen Fokusbereich in der Probe fokussiert wird. Dies kann beispielsweise dadurch erreicht werden, dass die Umlenkeinrichtung zwei sich gegenüberliegende Spiegel aufweist und dass der Lichtstreifen mithilfe der Strahlablenkvorrichtung alternierend, insbesondere mit einer Taktfrequenz im Bereich von beispielsweise 1 kHz, unter zwei verschiedenen Winkel symmetrisch um die Objektivachse verkippt wird, so dass die Probe über die beiden Spiegel von zwei sich gegenüberliegenden Seiten beleuchtet wird. Dabei ist die Oszillationsfrequenz zum Erzeugen des Lichtstreifens wesentlich größer als die Taktfrequenz zum Wechseln der Beleuchtungsrichtung.

Gemäß einer anderen Ausführung der Erfindung kann die Probe radial aus allen Richtungen einer Ebene mit des Lichtstreifens beleuchtet werden bzw. beleuchtbar sein, wobei auch hier der Lichtstreifen aus jeder der Richtungen der Ebene in einem einzigen Fokusbereich in der Probe fokussiert wird. Hierzu kann die Umlenkeinrichtung derart ausgestaltet sein, dass die reflektierende Fläche zumindest teilweise auf der Innenseite eines Konus ausgebildet ist. Zusätzlich wird der Lichtstreifen mit Hilfe der Strahlablenkvorrichtung kreisförmig um die optische Achse des Objektivs geführt, so dass zeitgemittelt eine radiale Beleuchtung der Probe von allen Seiten resultiert.

Das eingangs erläuterte SPIM-Verfahren erlaubt in vorteilhafter Weise eine dreidimensionale Abbildung einer räumlich ausgedehnten Probe. Dieses Abbildungsverfahren basiert dabei auf einer schichtweisen Detektion der Probe und anschließender Rekonstruktionen der dreidimensionalen Form aus den zweidimensionalen Schichtaufnahmen. Für die Aufnahme der einzelnen Bilder ist es in besondere Weise von Vorteil, wenn die Probe relativ zum Objektiv und zur Umlenkvorrichtung, insbesondere entlang der optischen Achse des Objektivs, verschoben wird bzw. verschiebbar ist. Zusätzlich kann es auch vorgesehen sein, wenn die Probe relativ zum Objektiv und zur Umlenkvorrichtung, insbesondere um die optische Achse des Objektivs gedreht wird bzw. drehbar ist. Durch das Drehen der Probe kann ebenfalls eine Beleuchtung aus mehreren Richtungen erreicht werden.

Weiterhin kann vorgesehen sein, dass die Probe in einem optischen Medium, insbesondere einem Immersionsmittel, positioniert wird bzw. positionierbar ist. Die kann dazu dienen, die optische Auflösung zu erhöhen, lebende Zellen oder Gewebe die von wässrigen Lösungen umgeben sind zu beobachten und/oder um kontrastsenkende Reflexionen durch Vermeidung von Brechungsindex-Wechsel zu unterdrücken. Mögliche Immersionsmittel sind beispielsweise Wasser, Silikonöl oder Glycerin.

Insbesondere bei der Verwendung von derartigen optischen Medien kann es von Vorteil sein, wenn die Probe in einer Probenkammer positioniert wird bzw. positionierbar ist. Alternativ kann auch eine Kapillare zur Positionieren der Probe vorgesehen sein.

Um eine Kollision der Probe und/oder der die Probe haltendenden Vorrichtungen mit der Umlenkvorrichtung und/oder dem Objektiv zu vermeiden, kann die Probe in vorteilhafter Weise auf einem Sockel positioniert werden bzw. positionierbar sein. Durch den Einsatz eines Sockels kann die Probe zur Erhöhung der optischen Auflösung besonders nah an die Optik des Objektivs positioniert werden, insbesondere dann, wenn die Umlenkeinrichtung, wie zuvor beschrieben, derart ausgestaltet ist, dass sie die Probe seitlich umgibt.

Bei der Verwendung von optischen Medien, insbesondere von Immersionsmitteln kann es nach einer weiteren Ausgestaltung der Erfindung vorgesehen sein, dass das Objektiv als Eintauchobjektiv ausgebildet ist und dass darüber hinaus das Objektiv und/ oder die Umlenkvorrichtung in die Probenkammer und/oder in das optische Medium eintaucht.

Nach einer anderen Ausgestaltungsform der Erfindung kann vorgesehen sein, dass mehrere Proben beispielsweise in einer Matrixform angeordnet werden und dass diese nacheinander oder sich zyklisch wiederholend mikroskopische Untersuchungen unter Verwendung der erfindungsgemäßen Vorrichtung zur Beleuchtung und/oder unter Verwendung des erfindungsgemäßen Verfahrens vorgenommen werden. Dazu können die Proben beispielsweise auf einem Objektträger, beispielsweise in Agar oder Wasser eingebettet, aufgebracht sein und nacheinander abgefahren werden. Hierbei kann vorgesehen sein, dass der Probenträger abgesenkt wird, wenn die Position relativ zum Objektiv und/oder zur Umlenkvorrichtung verändert werden soll. Nach dem Verschieben an die neue Stelle wird die Probe wieder an das Objektiv und die Umlenkvorrichtung herangefahren.

Nach einer besonders vorteilhaften Ausführungsform der Erfindung kann dem Lichtstreifen ein Stimulationslichtstrahl und/oder ein Stimulationslichtstreifen zum Vergrößern der optischen Auflösung nach dem Prinzip der STED-Mikroskopie überlagert werden bzw. überlagerbar sein. Das Prinzip der Prinzip der STED-Mikroskopie (Stimulated Emission Depletion) ist beispielsweise in S. Hell, et al., Stimulated Emission Depletion Fluorescence Microscopy, Optics Letters. 19, Nr. 11, 1994, S. 780-782 beschrieben und dient dazu, die räumliche Auflösung einer lichtmikroskopischen Abbildung über die Beugungsgrenze hinaus zu steigern. Dabei werden durch den Stimulationslichtstrahl bzw. den Stimulationslichtstreifen Fluoreszenzfarbstoffe, die zum Markieren einzelner Bereiche der Probe eingesetzt werden, gezielt abgeregt und damit gleichsam ausgeschaltet, so dass die während der Detektion kein weiteres Fluoreszenzlicht aussenden. Demgemäß könnte man den Stimulationslichtstrahl auch als Ausschaltlichtstrahl und den Stimulationslichtstreifen auch als Ausschaltlichtstreifen bezeichnen.

Bei dem erfindungsgemäßen Verfahren und der erfindungsgemäßen Vorrichtung zum Beleuchten der Probe kann das STED-Verfahren derart eingesetzt werden, dass der Bereich in der Probe, aus dem Fluoreszenzlicht von der Probe ausgesandt wird, kleiner ist als der Bereich der Probe, der von des Lichtstreifens beleuchtet wird. Effektiv wird bei einer vorteilhaften Ausführung erreicht, dass die resultierende Lichtstreifen dünner bzw. flacher geformt wird.

Eine andere Möglichkeit zur Erhöhung des Auflösungsvermögens besteht in der Nutzung der Resolft-Technologie. Hierbei werden besondere Farbstoffe verwendet, die ganz gezielt durch Beaufschlagung mit geeignetem Licht in einen Zustand versetzt werden können, in dem sie kein Detektionslicht mehr abgeben. Durch gezielte Beaufschlagung eines Bereichs des von dem Lichtstreifen beleuchteten Probenbereichs mit geeignetem Licht, kann der Bereich der Detektionslicht emittiert verringert und damit das Auflösungsvermögen erhöht werden.

Besonders bevorzugt werden dazu der Lichtstreifen und der Stimulationslichtstrahl bzw. der Stimulationslichtstreifen derart überlagert, dass beide in einem gemeinsamen Bereich in der Probe fokussiert werden. Während bei der herkömmlichen Anwendung des STED-Verfahrens der Fokus des Stimulationslichtstrahls im Querschnitt ringförmig ist, gleichsam einer TEM_{01*} Laguerre-Gauß-Mode, sieht die hier beschriebene Ausführung der Erfindung vorteilhaft eine Fokusform des Stimulationslichtstrahls vor, die symmetrisch oberhalb und unterhalb der von des Lichtstreifens erzeugten Beleuchtungsebene im Querschnitt zwei Intensitätsmaxima und dazwischen im Fokus des Lichtstreifens ein Minimum, gleichsam einer TEM₀₁ Hermite-Gauß-Mode, aufweist. Zur Erzeugen einer solchen Lichtmode kann beispielsweise eine Phasenplatte verwendet werden. Dadurch wird erreicht dass der Lichtstreifen lediglich in Richtung ihrer Fokusquerausdehnung senkrecht zur Beleuchtungsebene, nicht jedoch in Richtung der Fokuslängsausdehnung herabgesetzt wird. Insgesamt ergibt sich somit eine großflächige und zugleich sehr dünne Lichtstreifen die es erlaubt, räumlich hoch aufgelöste Schrittbilder der Probe auftreten zu können.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1a: eine schematische Darstellung, die eine vollständige Ausleuchtung der Eintrittspupille eines Objektivs zur Erzeugung eines Fokus veranschaulicht,
- Fig. 1b, c: je eine schematische Darstellung, die die Wirkung des Verkippens eines in die Eintrittspupille des Objektivs eintretenden Lichtbündels veranschaulicht,
- Fig. 2a: eine schematische Darstellung, die das Unterleuchten der Eintrittspupille eines Objektivs zur Erzeugung eines Fokus veranschaulicht,
- Fig. 2b, c: je eine schematische Darstellung, die die Wirkung des Verkippens eines die Eintrittspupille des Objektivs unterleuchtenden Lichtbündels veranschaulicht,
- Fig. 3a: eine schematische Darstellung, die das dezentrale Unterleuchten der Eintrittspupille eines Objektivs zur Erzeugung eines Fokus veranschaulicht,
- Fig. 3b, c: je eine schematische Darstellung, die die Wirkung des Verkippens eines die Eintrittspupille des Objektivs dezentral unterleuchtenden Lichtbündels veranschaulicht,
- Fig.4: eine schematische Darstellung einer möglichen Ausführungsform der erfindungsgemäßen Vorrichtung zum Durchführen des erfindungsgemäßen Verfahrens zum Beleuchten einer Probe in der SPIM-Mikroskopie,
- Fig.5: eine schematische Darstellung einer weiteren möglichen Ausführungsform der erfindungsgemäßen Vorrichtung zum Durchführen des erfindungsgemäßen Verfahrens zum Beleuchten einer Probe in der SPIM-Mikroskopie, die zusätzlich zu der in Fig.4 gezeigten Ausführungsform eine Zylinderoptik aufweist,
- Fig. 6: eine schematische Darstellung einer Umlenkvorrichtung und eines Objektivs nach einer dritten Ausführungsform der erfindungsgemäßen Vorrichtung zum Durchführen des erfindungsgemäßen Verfahrens und
- Fig. 7: eine schematische Darstellung einer vierten Ausführungsform der erfindungsgemäßen Vorrichtung zum Durchführen des erfindungsgemäßen Verfahrens zum Beleuchten einer Probe in der SPIM-Mikroskopie, die unter anderem den Einsatz eines weiteren Objektivs vorzieht.

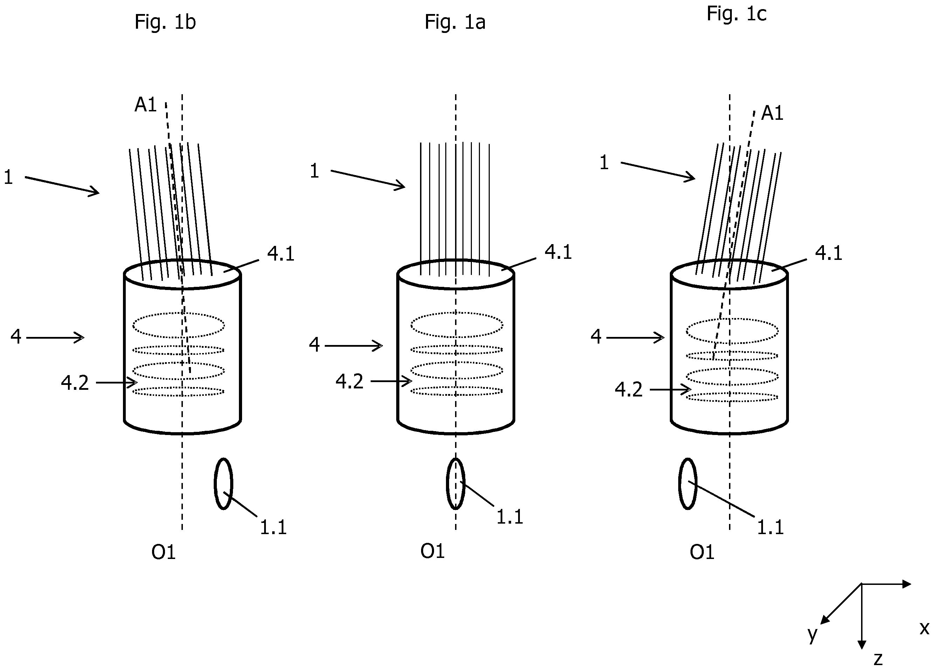

Unter Bezugnahme auf die Figuren 1a-1c, 2a-2c und 3a-3c werden im Folgenden zunächst die Prinzipien der verschiedenen Pupillenbeleuchtungsmöglichkeiten veranschaulicht. Dabei ist zu berücksichtigen, dass diese Figuren lediglich rein schematische Darstellungen sind, die zum besseren Verständnis der Erfindung dienen sollen. In der nachstehenden Erläuterung wird jeweils auf ein Koordinatensystem Bezug genommen, dessen x-Achse in der Zeichenebene horizontal und dessen z-Achse in der Zeichenebene vertikal ausgerichtet ist, während die y-Achse aus der Zeichenebene heraus zeigt.

In Figur 1a ist der Fall einer vollständigen Ausleuchtung der Eintrittspupille 4.1 eines Objektivs 4 mit einem Lichtbündel 1 gezeigt. Das Lichtbündel 1 verläuft parallel zur optischen Achse O1 des Objektivs 4 (z-Achse) und tritt senkrecht in die Eintrittspupille 4.1 (x-y-Ebene) des Objektivs 4 ein. Das Objektiv 4 erzeugt eine fokussierte Lichtverteilung in Form eines Fokus des Lichtbündels 1.1, dessen Ausdehnung längs der optischen Achse O1 größer ist als quer zur optischen Achse O1.

Die Figuren 1b und 1c zeigen, wie sich die Lage des Fokus 1.1 ändert, wenn das Lichtbündel 1 in der Eintrittspupille 4.1 des Objektivs 4 relativ zur optischen Achse O1 verkippt wird, aber dennoch die Eintrittspupille 4.1 vollständig ausleuchtet. Die durch das Verkippen erzeugte Änderung der Einfallsrichtung A1 des Lichtbündels 1 wird durch das die Optik 4.2 des Objektiv 4 in eine Verschiebung des Fokus 1.1 quer zur optischen Achse O1 umgesetzt. Da das Lichtbündel 1 die Eintrittspupille 4.1 des Objektivs 4 vollständig durchsetzt, bleibt der Fokus 1.1 mit seiner Längserstreckung parallel zur optischen Achse O1 ausgerichtet.

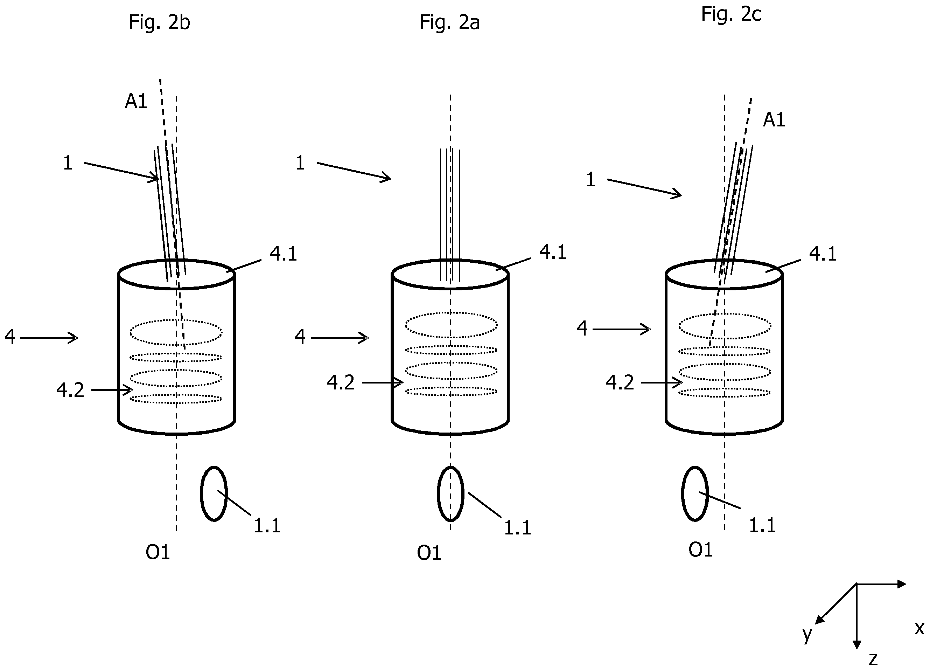

In Figur 2a ist eine Unterleuchtung der Eintrittspupille 4.1 des Objektivs 4 dargestellt. Wie zu erkennen ist, durchsetzt das Lichtbündel 1 lediglich einen zentralen Teilbereich der Eintrittspupille 4.1 des Objektivs 4. Durch die Unterleuchtung der Eintrittspupille 4.1 wird eine Aufweitung des Fokus 1.1 bewirkt, d.h. der Fokus 1.1 ist insgesamt größer als bei der vollständigen Ausleuchtung der Eintrittspupille 4.1.

In den Figuren 2b und 2c ist nun der Fall gezeigt, in dem das die Eintrittspupille 4.1 unterleuchtende Lichtbündel 1 zentral durch die Eintrittspupille 4.1 verläuft und in der Eintrittspupille 4.1 verkippt wird. Unter Berücksichtigung der Erläuterungen bezüglich der vorherigen Figuren ergibt sich insgesamt eine Verschiebung des aufgeweiteten Fokus 1.1 nach außen, wobei der Abstand von der optischen Achse O1 umso größer ist, je mehr das Lichtbündel 1 relativ zur optischen Achse O1 verkippt wird.

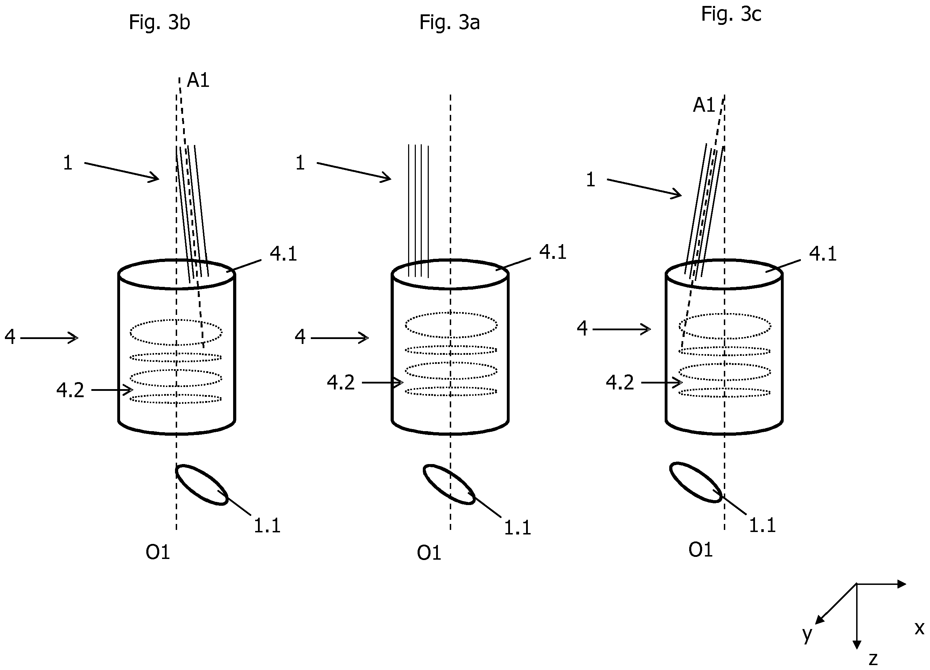

In Figur 3a-3c ist das die Eintrittspupille 4.1 des Objektivs 4 unterleuchtende Lichtbündel 1 zusätzlich dezentral versetzt angeordnet ist, d.h. quer zur optischen Achse O1 verschoben. Diese Dezentrierung des Lichtbündels 1 in der Eintrittspupille 4.1 führt dazu, dass der Fokus 1.1 relativ zur optischen Achse O1 schräg gestellt wird. Dies kann beispielsweise dazu nützlich sein, den Lichtstreifen 2 unter verschieden Winkel zur optischen Achse O1 in die Probe zu führen.

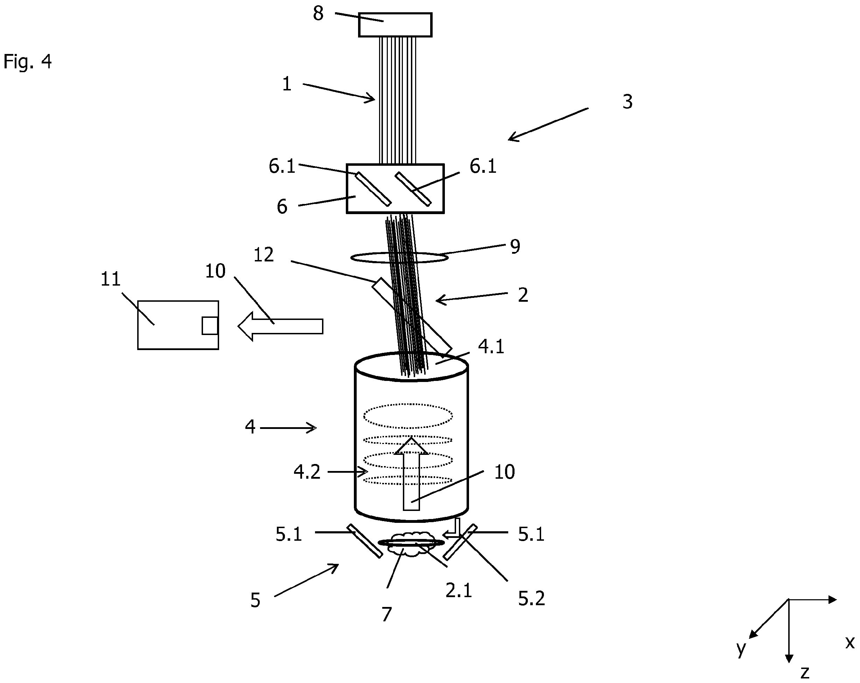

Figur 4 zeigt in schematischer Darstellung eine mögliche Ausführungsform der erfindungsgemäßen Vorrichtung zum Durchführen des erfindungsgemäßen Verfahrens zum Beleuchten einer Probe in der SPIM-Mikroskopie. Dazu weist die Vorrichtung eine Lichtquelle 8 zum Erzeugen des Lichtbündels 1 auf. Im hier gezeigten Ausführungsbeispiel ist die Lichtquelle ein Festkörperlaser, der einen CW-Laserstrahl beispielsweise mit einer Wellenlänge von 532 nm aussendet.

Weiterhin weist die Vorrichtung eine Strahlablenkvorrichtung 6 auf, die aus dem Lichtbündel 1 in der eingangs beschriebenen Weise einen Lichtstreifen 2 erzeugt und zudem das Lichtbündel 1 bzw. den erzeugten Lichtstreifen 2 in der Eingangspupille 4.1 des Objektivs 4 gegenüber der optischen Achse O1 verkippt. Im vorliegenden Ausführungsbeispiel werden hierzu zwei Kippspiegel 6.1 als wesentlicher Bestandteil der Strahlablenkvorrichtung 6 verwendet. Jeder dieser Kippspiegel 6.1 kann entlang zweier orthogonaler Raumrichtung mit einem maximalen Winkelhub von 20 Grad verkippt werden, wobei die Kippbewegung entlang beider Raumrichtungen jeweils mit einem elektromagnetischen Aktuator bewirkt wird. Im vorliegenden Ausführungsbeispiel ermöglichen die Aktuatoren unter anderem eine oszillierende Kippbewegung der Kippspiegel 6.1 entlang beider Richtung mit einer maximalen Bandbreit von 12 kHz. Insgesamt lässt sich damit zum einen eine Lichtstreifen 2 erzeugen. Zum anderen kann somit der Lichtstreifen 2 bzw. das Lichtbündel 1 unter verschiedenen Winkel und an verschiedenen Positionen in die Eintrittspupille 4.1 des Objektivs 4 geführt werden.

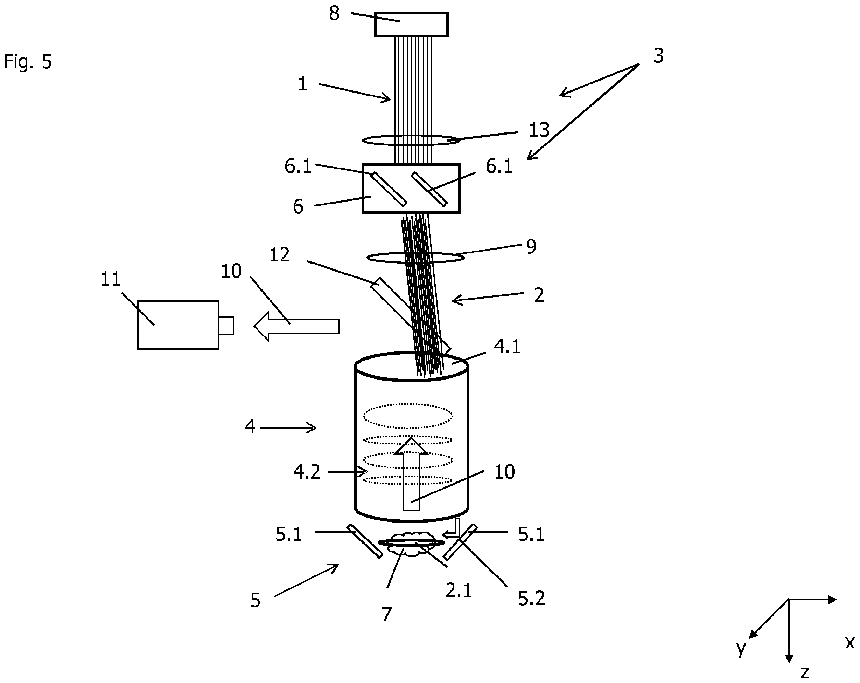

Alternativ kann anstelle oder zusätzlich zur Strahlablenkvorrichtung 6 auch noch einen Zylinderoptik 13 zum Erzeugen des Lichtstreifens 2 aufweisen. Eine derart ausgestaltete Ausführungsform der Erfindung mit einer Zylinderoptik 13 ist in Figur 5 dargestellt, wobei die Zylinderoptik 13 der Strahlablenkvorrichtung 6 vorgeschaltet ist. Es ist aber auch denkbar im Falle der Verwendung einer Zylinderoptik zumindest auf Teile Strahlablenkvorrichtung - oder auch auf die gesamte Strahlablenkvorrichtung - zu verzichten.

Die beiden in den Figuren 4 und 5 gezeigten Ausführungsbeispiele weisen im weiteren Strahlengang eine, dem Objektiv 4 vorgeschaltete zusätzliche Linsenoptik 9 auf. Die zusätzliche Linsenoptik 9 erzeugt zusammen mit der Optik 4.2 des Objektivs 4 in der zuvor erläuterten Weise den Fokus 2.2 des Lichtstreifens 2, die daraufhin von der Umlenkvorrichtung in die Probe 7 umgelenkt wird. Das Umlenken erfolgt dabei so, dass der Lichtstreifen 2 nach dem Umlenken zum Beleuchten der Probe 7 in einem von Null Grad verschiedenen Winkel, insbesondere wie hier in einem rechten Winkel, zur optischen Achse des Objektivs O1 verläuft und in der Probe 7 fokussiert ist. Wesentlich für die Erfindung ist hierbei, dass der Lichtstreifen 2 in Wechselwirkung mit der Optik 4.2 des Objektivs 4 tritt. Die Optik 4.2 des Objektivs 2 ist aber auch dazu bestimmt und ausgebildet, von der Probe 7 ausgehendes Detektionslicht 10 direkt oder indirekt einem Detektor 11 zuzuführen. Im vorliegenden Ausführungsbeispiel ist dazu ein Strahlteiler 12 im Strahlengang vorgesehen, der das von der Probe 7 ausgehende Detektionslicht 10 auf einen Detektor 11, beispielsweise wie hier einen CCD-Kamera, führt.

Den Figuren 4 und 5 ist ferner zu entnehmen, dass die Umlenkvorrichtung 5 zum Umlenken des Lichtstreifens - hier mit einem rechtwinkligen Pfeil 5.1 dargestellt - zwei plane Spiegel 5.1 aufweist, die beide eine für die vorgesehene Wellenlänge reflektierenden sind und die sich bezüglich der optischen Achse O1 des Objektivs 4 spiegelsymmetrisch gegenüberliegen. Durch die Verwendung zweier, sich gegenüberliegender Spiegel 5.1 kann erreicht werden, dass die Probe 7 zur Vermeidung von Abschattungen vorteilhaft aus zwei Richtung beleuchtet wird. Dazu wird, wie eingangs beschrieben mit Hilfe der Strahlablenkvorrichtung 6, der Lichtstreifen 2 zum flächenartigen Beleuchten der Probe 7 abwechselnd über die beiden Spiegel 5.1 in die Probe 7 geführt. Die Spiegel 5.1 sind dabei so angeordnet, dass der Lichtstreifen 2 aus beiden Richtungen in einen einzigen Fokusbereich 2.1 fokussiert ist bzw. fokussierbar ist.

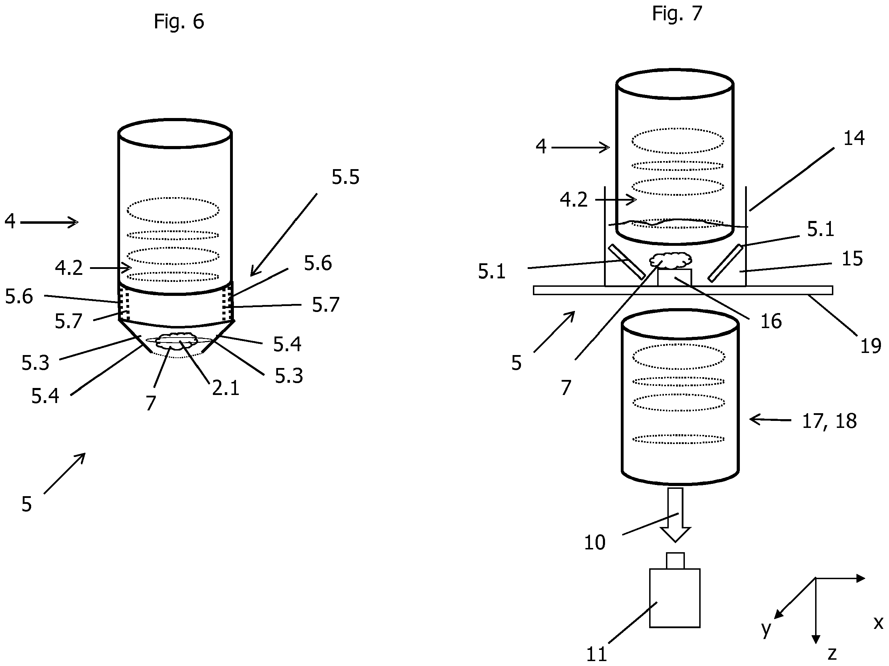

Alternativ kann auch eine radiale Beleuchtung der Probe aus allen Richtungen einer Ebene erfolgen. Dazu weist die Umlenkvorrichtung 5 nach einer weiteren Ausführungsform der Erfindung, wie in Figur 6 gezeigt, eine reflektierende Fläche 5.3 auf, die auf der Innenseite eines Konus 5.4 aufgebracht ist. Wird nun der Lichtstreifen 2 mit Hilfe der Strahlablenkvorrichtung 6 in der Eintrittspupille 4.1 des Objektivs 4 auf einer Ringbahn um die optische Achse O1 geführt, so wird zeitgemittelt eine flächenartige Beleuchtung der Probe aus allen Richtung einer Beleuchtungsebene erreicht.

Besonders vorteilhaft ist es, wenn die Umlenkvorrichtung 5 mit Hilfe einer manuell wieder lösbaren Verbindung 5.5 am Gehäuse 4.3 des Objektivs 4 festgelegt werden kann. Nach der in Figur 6 gezeigten Ausführungsform der Erfindung ist dazu an der konusartige Umlenkvorrichtung 5 ein Innengewinde 5.6 vorgesehen, mit dem die Umlenkvorrichtung mittels eines korrespondierenden Außengewinde 5.7 am Gehäuse 4.3 des Objektivs 4 an das Objektiv 4 angeschraubt werden kann. Darin liegt der besondere Vorteil, dass die Umlenkeinrichtung 5 beispielsweise gegen eine andersartig ausgestaltete Umlenkvorrichtung ausgetauscht werden kann. Alternativ kann auch ein Objektiv 2 auf diese Weise sehr einfach für das SPIM-Verfahren mit einer entsprechend ausgestalteten Umlenkvorrichtung 5 nachgerüstet werden.

Figur 7 zeigt eine weitere Ausführungsform der Erfindung, bei der sich die Probe 7 in einer mit einem optischen Medium 15 gefüllten Probenkammer 14 befindet. Zusätzlich ist die Probe 7 auf einem Sockel 16 positioniert, so dass die Probe 7 an die hochauflösende Optik 4.2 des Objektivs 4 herangefahren werden kann. Insbesondere kann die Probe 7 auf diese Weise kollisionsfrei zwischen die beiden Spiegel 5.1 der in Figur 7 gezeigten Umlenkvorrichtung 5 positioniert werden. Sowohl das Objektiv 2, das hier als Eintauchobjektiv ausgebildet ist, als auch die Umlenkvorrichtung 5 tauchen in das optische Medium 15 und damit auch in die Probekammer 14 ein. Als optisches Medium 15 wird im vorliegenden Beispiel Glyzerin verwendet. Denkbar sind aber auch Wasser, Silikonöl oder andere Immersionsmittel.

Außerdem ist Figur 7 zu entnehmen, dass neben dem Objektiv 4 auch ein weiteres Objektiv 17 oder eine Kondensoroptik 18 für die Detektion verwendet werden kann, d.h. um von der Probe 7 ausgehendes Detektionslicht 10 direkt oder indirekt einem Detektor 11 zuzuführen. In dem hier gezeigten Ausführungsbeispiel befindet sich ein weiteres Objektiv 17 unterhalb der Probe 7, gegenüber des Objektivs 2 und entlang dessen optischer Achse O1 ausgerichtet. Auch kann sich, wie in Figur 7 gezeigt, ein Deckglas 19 zwischen der Probe 7 und dem weiteren Objektiv 4 befinden, dessen Optik 4.2 dementsprechend für die Beobachtung durch das Deckglas 19 korrigiert ist.

### Bezugszeichenliste

- 1: Lichtbündel
- 1.1: Fokus des Lichtbündels

- 2: Lichtstreifen
- 2.1: Fokus des Lichtstreifens

- 3: Optische Mittel (zum Erzeugen eines Lichtstreifens)

- 4: Objektiv
- 4.1: Eintrittspupille (des Objektivs)
- 4.2: Optik (des Objektivs)

- 5: Umlenkvorrichtung
- 5.1: planer Spiegel
- 5.2: rechtwinkliger Pfeil (symbolisiert das Umlenken des Lichtstreifens)
- 5.3: reflektierende Fläche
- 5.4: Innenseite des Konus
- 5.5: wieder lösbare Verbindung
- 5.6: Innengewinde
- 5.7: Außengewinde

- 6: Strahlablenkvorrichtung
- 6.1: Kippspiegel

- 7: Probe
- 8: Lichtquelle
- 9: zusätzliche Linsenoptik

- 10: Detektionslicht
- 11: Detektor
- 12: Strahlteiler

- 13: Zylinderoptik

- 14: Probenkammer
- 15: optisches Medium
- 16: Sockel

- 17: weiteres Objektiv
- 18: Kondensoroptik

- 19: Deckglas

- O1: optische Achse des Objektivs
- A1: Einfallsrichtung in das Objektiv

## Patentansprüche

1. Verfahren zum Beleuchten wenigstens einer Probe in der SPIM-Mikroskopie beinhaltend folgende Schritte:
a. Erzeugen eines Lichtbündels (1),
b. Erzeugen eines Lichtstreifens (2) aus dem Lichtbündel (1) mit einem mit dem Lichtbündel (1) in Wechselwirkung tretenden optischen Mittel (3),
**gekennzeichnet durch** die weiteren Schritte:
c. Führen des Lichtstreifens (2) durch wenigstens ein Objektiv (4), das eine Optik (4.2) aufweist, die dazu ausgebildet und bestimmt ist, von der Probe (7) ausgehendes Detektionslicht (10) direkt oder indirekt einem Detektor (11) zuzuführen, wobei die Optik (4.2) des Objektivs (4) mit dem Lichtstreifen (2) in Wechselwirkung tritt, und
d. Umlenken des Lichtstreifens (2) mit einer der Optik (4.2) des Objektivs (4) nachgeschalteten Umlenkvorrichtung (5) derart, dass sich der Lichtstreifen (2) nach dem Umlenken zum Beleuchten der Probe (7) in einem von Null Grad verschiedenen Winkel zur optischen Achse des Objektivs (4) ausbreitet.

2. Verfahren nach Anspruch 1, **dadurch gekennzeichnet, dass**
a. das optische Mittel (3) zum Erzeugen des Lichtstreifens (2) wenigstens eine Strahlablenkvorrichtung aufweist oder dass
b. das optische Mittel zum Erzeugen des Lichtstreifens wenigstens eine Strahlablenkvorrichtung (6) aufweist, die als Strahlablenkeinrichtung eines Scanmikroskops oder eines konfokalen Scanmikroskops ausgebildet ist, oder dass
c. das optische Mittel (3) zum Erzeugen des Lichtstreifens (2) wenigstens eine Strahlablenkvorrichtung (6) aufweist, wobei die Strahlablenkvorrichtung wenigstens eines der folgenden Elemente aufweist: einen Drehspiegel oder einen Kippspiegel (6.1) oder einen Galvanometerspiegel oder ein drehbares Prisma oder eine verschiebbare Linse oder einen akusto-optischen Deflektor, oder dass
d. das optische Mittel (3) zum Erzeugen des Lichtstreifens (2) wenigstens eine Zylinderoptik (13) aufweist oder dass
e. der Lichtstreifen (2) nach dem Umlenken in der Probe fokussiert ist.

3. Verfahren nach einem der Ansprüche 1 oder 2, **dadurch gekennzeichnet, dass**
a. das Objektiv (4) ein Eintauchobjektiv ist oder dass das Objektiv (4) ein Eintauchobjektiv ist und in eine Probenkammer (14) oder in ein Probengefäß eintaucht, die mit einem optischen Medium gefüllt ist, das die Probe (7) umgibt oder dass
b. eine zu beleuchtende Probe (7) in einer Probenkammer oder einem Probengefäß positioniert wird, die mit einem optischen Medium gefüllt ist, das die Probe (7) umgibt, und dass die Umlenkvorrichtung in das Medium eintaucht oder in dem Medium angeordnet ist oder dass
c. das Objektiv (4) zum Beleuchten der Probe (7) und/oder zum direkten oder indirekten Zuführen des von der Probe (7) ausgehenden Detektionslichts (10) zu dem Detektor (11) verwendet wird, und/oder dass
d. ein weiteres Objektiv oder eine Kondensoroptik zum direkten oder indirekten Zuführen des von der Probe ausgehenden Detektionslichts an den Detektor (11) verwendet werden oder dass
e. das Objektiv (4) oder die Umlenkvorrichtung (5) in die Probenkammer (14) und/oder in das optische Medium eingetaucht wird oder dass
f. das Objektiv (4) oder die Umlenkvorrichtung (5) in der Probenkammer (14) und/oder in dem optischen Medium angeordnet wird oder dass
g. die Umlenkvorrichtung (5) an dem Objektiv (4) oder dem weiteren Objektiv oder an der Kondensoroptik (18) festgelegt wird und/oder dass
h. die Umlenkvorrichtung (5) an dem Objektiv (4) und/oder dem weiteren Objektiv oder an der Kondensoroptik gegen die Kraft eines elastischen Elements verschiebbar gehalten ist oder dass
i. die Umlenkvorrichtung (5) an dem Objektiv (4) oder dem weiteren Objektiv oder an der Kondensoroptik gegen die Kraft eines elastischen Elements in einem von 90° verschiedenen Winkel gegenüber der optischen Achse des Objektivs(4), verschiebbar gehalten ist oder dass
j. die Umlenkvorrichtung (5) wenigstens ein Verbindungsmittel aufweist, derart dass die Umlenkvorrichtung als Nachrüstbauteil an das Objektiv (4) oder an dem anderen Objektiv oder an dem Kondensor festgelegt ist oder festlegbar ist oder dass
k. wenigstens ein Bauteil der Umlenkvorrichtung (5) mit einem Bauteil des Objektivs (4) oder einem Bauteil des weiteren Objektivs oder einem Bauteil der Kondensoroptik einstückig hergestellt ist.

4. Verfahren nach einem der Ansprüche 1 bis 3, **dadurch gekennzeichnet, dass**
a. die Probe (7) aus wenigstens zwei Richtungen mit dem Lichtstreifen (2) beleuchtet wird, wobei der Lichtstreifen (2) in einem einzigen Fokusbereich in der Probe (7) fokussiert wird oder dass
b. die Probe (7) radial aus allen Richtungen einer Ebene mit dem Lichtstreifens(2) beleuchtet wird, wobei der Lichtstreifen (2) in einem einzigen Fokusbereich in der Probe (7) fokussiert wird oder dass
c. die Probe (7) durch Ändern der Einstrahlrichtung aus wenigstens zwei Richtungen beleuchtet wird oder dass
d. die Probe (7) durch Ändern der Einstrahlrichtung mit Hilfe der Umlenkvorrichtung oder dem optischen Mittel zum Erzeugen des Lichtstreifens (2) aus wenigstens zwei Richtungen beleuchtet wird oder dass
e. die Probe (7) durch Rotieren der Einstrahlrichtung radial aus allen Richtungen einer Ebene mit dem Lichtstreifens beleuchtet wird oder dass
f. die Probe (7) durch Rotieren der Einstrahlrichtung mit Hilfe der Umlenkvorrichtung oder dem optischen Mittel zum Erzeugen des Lichtstreifens radial aus allen Richtungen einer Ebene mit dem Lichtstreifens beleuchtet wird.

5. Verfahren nach einem der Ansprüche 1 bis 4, **dadurch gekennzeichnet, dass** die Probe für die SPIM-Mikroskopie
a. zum Objektiv und zur Umlenkvorrichtung (5) verschoben und/oder gedreht wird oder
b. in einem optischen Medium positioniert wird oder
c. in einer Probenkammer (14) positioniert wird oder
d. in einer Kapillare positioniert wird oder
e. auf einem Sockel positioniert wird oder
f. in einer Probenkammer positioniert wird, die mit einem optischen Medium gefüllt ist, das die Probe umgibt.

6. Verfahren nach einem der Ansprüche 1 bis 5, **dadurch gekennzeichnet, dass**
a. das Lichtbündel (1) als divergentes Lichtbündel (1) auf das Objektiv (4) gelenkt wird und/oder dass
b. das Lichtbündel (1) mit einer zusätzlichen Optik, die ausschließlich auf das Lichtbündel (1), nicht jedoch auf das der Detektionslicht wirkt, beeinflusst wird und/oder dass
c. eine Verlängerung des Detektionsstrahlenganges vorgenommen wird.

7. Verfahren nach einem der Ansprüche 1 bis 6, **dadurch gekennzeichnet, dass**
a. dem Lichtstreifen (2) wenigstens ein Stimulationslichtbündel oder ein Stimulationslichtstreifen zum Vergrößern der optischen Auflösung nach dem Prinzip der STED-Mikroskopie (Stimulated Emission Depletion) derart überlagert wird, dass der Bereich der Probe (7), aus dem das zum Erzeugen einer Abbildung zu detektierende Licht ausgesandt wird, kleiner ist als der Bereich der Probe, der von dem Lichtstreifen beleuchtet wird oder dass
b. dem Lichtstreifen (2) wenigstens ein Stimulationslichtstreifen zum Vergrößern der optischen Auflösung nach dem Prinzip der STED-Mikroskopie (Stimulated Emission Depletion) überlagert wird, wobei sich der Lichtstreifen (2) und der Stimulationslichtstreifen teilweise überlappen und parallel zueinander ausgerichtet sind.

8. Mikroskopieverfahren, **dadurch gekennzeichnet, dass**
a. eine Probe (7) gemäß einem Verfahren nach einem der Ansprüche 1 bis 7 beleuchtet wird oder dass
b. mehrere Proben (7) gemeinsam auf einem Objekttisch oder auf einem Objektträger angeordnet werden und eine Probe nach der anderen mikroskopisch untersucht wird, wobei jede Probe nach einem Verfahren nach einem der Ansprüche 1 bis 7 beleuchtet wird.

9. Vorrichtung zum Beleuchten einer Probe bei der SPIM- Mikroskopie,
a. mit einer Lichtquelle (8) zum Erzeugen eines Lichtbündels (1),
b. mit Mitteln (3) zum Erzeugen eines Lichtstreifens (2) aus dem Lichtbündel (1) zum im Wesentlichen flächenartigen Beleuchten einer Probe in einer Beleuchtungsebene aus wenigstens einer Richtung, und mit wenigstens einem Objektiv (4), das eine Optik (4.2) aufweist,
**dadurch gekennzeichnet, dass**
c. die Optik (4.2) dazu ausgebildet und bestimmt ist, von der Probe (7) ausgehendes Detektionslicht (10) direkt oder indirekt einem Detektor (11) zuzuführen, wobei die Optik (4.2) des Objektivs (4) mit dem Lichtstreifen (2) in Wechselwirkung tritt,
d. und mit einer der Optik (4.2) des Objektivs (4) nachgeschalteten Umlenkvorrichtung (5) zum Umlenken des Lichtstreifens (2), wobei sich der Lichtstreifen (2) nach dem Umlenken zum Beleuchten einer Probe (7) in einem von Null Grad verschiedenen Winkel zur optischen Achse des Objektivs (4) ausbreitet und/oder in einer zur optischen Achse des Objektivs (4) nicht parallelen Ebene angeordnet ist.

10. Vorrichtung nach Anspruch 9, **dadurch gekennzeichnet, dass**
a. das optischen Mittel (3) zum Erzeugen des Lichtstreifens (2) wenigstens eine Strahlablenkvorrichtung aufweist oder dass
b. das optische Mittel (3) zum Erzeugen des Lichtstreifens (2) wenigstens eine Strahlablenkvorrichtung aufweist, die als Strahlablenkeinrichtung eines Scanmikroskops oder eines konfokalen Scanmikroskops ausgebildet ist oder dass
c. das optische Mittel (3) zum Erzeugen des Lichtstreifens (2) wenigstens eine Strahlablenkvorrichtung (6) aufweist, wobei die Strahlablenkvorrichtung wenigstens eines der folgenden Elemente aufweist: einen Drehspiegel oder einen Kippspiegel (6.1) oder einen Galvanometerspiegel oder ein drehbares Prisma oder eine verschiebbare Linse oder einen akusto-optischen Deflektor oder dass
d. das optische Mittel (3) zum Erzeugen des Lichtstreifens (2) wenigstens eine Zylinderoptik (13) aufweist oder dass
e. das Objektiv (4) ein Eintauchobjektiv ist oder dass
f. das Objektiv (4) ein Eintauchobjektiv ist und dass das Objektiv (4) dazu ausgebildet und bestimmt ist, in eine Probenkammer (14) oder in ein Probengefäß einzutauchen, die mit einem optischen Medium gefüllt ist, das eine zu beleuchtende Probe (7) umgibt.

11. Vorrichtung nach Anspruch 9 oder 10, **dadurch gekennzeichnet, dass** die Vorrichtung ein weiteres Objektiv oder eine Kondensoroptik zum direkten oder indirekten Zuführen des von der Probe (7) ausgehenden Detektionslichts (10) an den Detektor (11) aufweist.

12. Vorrichtung nach einem der Ansprüche 9 bis 11, **dadurch gekennzeichnet, dass**
a. die Umlenkvorrichtung (5) an dem Objektiv (4) oder dem weiteren Objektiv oder an der Kondensoroptik festlegbar ist oder festgelegt ist oder dass
b. die Umlenkvorrichtung (5) an dem Objektiv (4) oder dem weiteren Objektiv oder an der Kondensoroptik gegen die Kraft eines elastischen Elements verschiebbar gehalten ist oder dass
c. die Umlenkvorrichtung (5) an dem Objektiv (4) oder dem weiteren Objektiv oder an der Kondensoroptik gegen die Kraft eines elastischen Elements in einem von 90° verschiedenen Winkel gegenüber der optischen Achse des Objektivs verschiebbar gehalten ist oder dass
d. die Umlenkvorrichtung (5) ein Verbindungsmittel aufweist derart, dass die Umlenkvorrichtung als Nachrüstbauteil an das Objektiv oder ein anderes Objektiv festlegbar ist und/oder dass
e. wenigstens ein Bauteil der Umlenkvorrichtung (5) mit einem Bauteil des Objektivs oder einem Bauteil des weiteren Objektivs oder einem Bauteil der Kondensoroptik einstückig hergestellt ist oder dass
f. die Umlenkvorrichtung (5) zum Umlenken des Lichtstreifens (2) wenigstens eine zumindest teilweise reflektierende Fläche aufweist oder dass
g. die Umlenkvorrichtung (5) zum Umlenken des Lichtstreifens (2) wenigstens eine zumindest teilweise reflektierende Fläche aufweist, wobei die reflektierende Fläche als Teil eines planen Spiegels ausgebildet ist oder dass
h. die Umlenkvorrichtung (5) zum Umlenken des Lichtstreifens (2) wenigstens eine zumindest teilweise reflektierende Fläche aufweist, wobei die reflektierende Fläche zumindest teilweise auf der Innenseite eines Konus ausgebildet ist und/oder dass
i. eine Probe (7) aus wenigstens zwei Richtungen mit des Lichtstreifens beleuchtbar ist, wobei der Lichtstreifen in einem einzigen Fokusbereich in der Probe fokussierbar ist oder dass
j. eine Probe (7) radial aus allen Richtungen einer Ebene mit des Lichtstreifens beleuchtbar ist, wobei der Lichtstreifen aus jeder der Richtungen der Ebene in einem einzigen Fokusbereich in der Probe fokussierbar ist oder dass
k. die Probe (7) durch Ändern der Einstrahlrichtung aus wenigstens zwei Richtungen beleuchtbar ist oder dass
l. die Probe (7) durch Ändern der Einstrahlrichtung mit Hilfe der Umlenkvorrichtung (5) und/oder dem optischen Mittel zum Erzeugen des Lichtstreifens aus wenigstens zwei Richtungen beleuchtbar ist oder dass
m. die Probe (7) durch Rotieren der Einstrahlrichtung radial aus allen Richtungen einer Ebene mit dem Lichtstreifen beleuchtbar ist.

13. Vorrichtung nach einem der Ansprüche 9 bis 12, **dadurch gekennzeichnet, dass**
a. das Lichtbündel (1) als divergentes Lichtbündel auf das Objektiv (4) trifft und/oder dass
b. das Lichtbündel (1) eine zusätzliche Optik durchläuft, die ausschließlich auf das Lichtbündel (1), nicht jedoch auf das der Detektionslicht wirkt und/oder dass
c. die Vorrichtung einen verlängerten Detektionsstrahlengang aufweist.

14. Vorrichtung nach einem der Ansprüche 9 bis 13, **dadurch gekennzeichnet, dass**
a. dem Lichtstreifen (2) wenigstens ein Stimulationslichtbündel und/oder ein Stimulationslichtstreifen zum Vergrößern der optischen Auflösung nach dem Prinzip der STED-Mikroskopie (Stimulated Emission Depletion) derart überlagert ist, dass der Bereich der Probe (7), aus dem das zum Erzeugen einer Abbildung zu detektierende Licht, kleiner ist als der Bereich der Probe, der von dem Lichtstreifen beleuchtet ist oder dass
b. dem Lichtstreifen (2) wenigstens ein Stimulationslichtstreifen zum Vergrößern der optischen Auflösung nach dem Prinzip der STED-Mikroskopie (Stimulated Emission Depletion) überlagert ist, wobei sich der Lichtstreifen (2) und der Stimulationslichtstreifen teilweise überlappen und parallel zueinander ausgerichtet sind.

15. Mikroskop oder Experimentaufbau zum mikroskopischen Abbilden einer Probe, **dadurch gekennzeichnet, dass**
a. eine Vorrichtung zum Beleuchten nach einem der Ansprüche 9 bis 14 oder zur Durchführung eines Verfahrens nach einem der Ansprüche 1 bis 8 vorhanden ist oder dass
b. eine Vorrichtung zum Beleuchten nach einem der Ansprüche 9 bis 14 oder zur Durchführung eines Verfahrens nach einem der Ansprüche 1 bis 8 vorhanden ist, wobei eine Vorrichtung zum Verschieben und/oder Drehen einer Probe relativ zum Objektiv (4) und zur Umlenkvorrichtung (5) vorgesehen ist oder wobei die Probe in einem optischen Medium positionierbar ist oder wobei eine Probenkammer oder eine Kapillare oder eine Probenschale für eine oder mehrere Proben vorgesehen ist oder wobei wenigstens ein Sockel vorgesehen ist, auf dem eine Probe positionierbar ist oder positioniert ist.

## Claims

1. Method for illuminating at least one sample in SPIM microscopy, including the following steps:
a. producing a light beam (1),
b. producing a strip of light (2) from the light beam (1) using an optical means (3) that interacts with the light beam (1),
**characterized by** the further steps of:
c. guiding the strip of light (2) through at least one objective (4) having an optical unit (4.2) which is configured and intended for guiding detection light (10) coming from the sample (7) directly or indirectly to a detector (11), wherein the optical unit (4.2) of the objective (4) interacts with the strip of light (2), and
d. diverting the strip of light (2) using a diverting apparatus (5) connected downstream of the optical unit (4.2) of the objective (4) in a manner such that the strip of light (2), for illuminating the sample (7), propagates after the diversion at an angle that differs from zero degrees with respect to the optical axis of the objective (4).

2. Method according to Claim 1, **characterized in that**
a. the optical means (3) for producing the strip of light (2) has at least one beam deflection apparatus, or **in that**
b. the optical means for producing the strip of light has at least one beam deflection apparatus (6) embodied in the form of a beam deflection device of a scanning microscope or of a confocal scanning microscope, or **in that**
c. the optical means (3) for producing the strip of light (2) has at least one beam deflection apparatus (6), wherein the beam deflection apparatus has at least one of the following elements: a rotating mirror or a tilting mirror (6.1) or a galvanometer mirror or a rotary prism or a displaceable lens or an acousto-optic deflector, or **in that**
d. the optical means (3) for producing the strip of light (2) has at least one cylindrical optical unit (13), or **in that**
e. the strip of light (2) after the diversion is focused in the sample.

3. Method according to either of Claims 1 and 2, **characterized in that**
a. the objective (4) is an immersion objective or **in that** the objective (4) is an immersion objective and is immersed in a sample chamber (14), or in a sample vessel, filled with an optical medium surrounding the sample (7), or **in that**
b. a sample (7) to be illuminated is positioned in a sample chamber, or a sample vessel, filled with an optical medium surrounding the sample (7), and **in that** the diverting apparatus is immersed in the medium or is arranged in the medium, or **in that**
c. the objective (4) is used for illuminating the sample (7) and/or for directly or indirectly guiding the detection light (10) coming from the sample (7) to the detector (11), and/or **in that**
d. a further objective or a condenser optical unit is used for directly or indirectly guiding the detection light coming from the sample to the detector (11), or **in that**
e. the objective (4) or the diverting apparatus (5) is immersed in the sample chamber (14) and/or in the optical medium, or **in that**
f. the objective (4) or the diverting apparatus (5) is arranged in the sample chamber (14) and/or in the optical medium, or **in that**
g. the diverting apparatus (5) is attached to the objective (4) or the further objective or the condenser optical unit (18), and/or **in that**
h. the diverting apparatus (5) is held on the objective (4) and/or the further objective or the condenser optical unit such that it is displaceable counter to the force of an elastic element, or **in that**
i. the diverting apparatus (5) is held on the objective (4) or the further objective or the condenser optical unit such that it is displaceable counter to the force of an elastic element at an angle that differs from 90° with respect to the optical axis of the objective (4), or **in that**
j. the diverting apparatus (5) has at least one connecting means in a manner such that the diverting apparatus is attached or attachable as a retrofit component to the objective (4) or to the other objective or to the condenser, or **in that**
k. at least one component of the diverting apparatus (5) is produced in one piece with a component of the objective (4) or a component of the further objective or a component of the condenser optical unit.

4. Method according to one of Claims 1 to 3, **characterized in that**
a. the sample (7) is illuminated with the strip of light (2) from at least two directions, wherein the strip of light (2) is focused in a single focusing region in the sample (7), or **in that**
b. the sample (7) is illuminated with the strip of light (2) radially from all directions of a plane, wherein the strip of light (2) is focused in a single focusing region in the sample (7), or **in that**
c. the sample (7) is illuminated from at least two directions by changing the irradiation direction, or **in that**
d. the sample (7) is illuminated from at least two directions by changing the irradiation direction with the aid of the diverting apparatus or the optical means for producing the strip of light (2), or **in that**
e. the sample (7) is illuminated with the strip of light radially from all directions of a plane by rotating the irradiation direction, or **in that**
f. the sample (7) is illuminated with the strip of light radially from all directions of a plane by rotating the irradiation direction with the aid of the diverting apparatus or the optical means for producing the strip of light.

5. Method according to one of Claims 1 to 4, **characterized in that** the sample for SPIM microscopy
a. is displaced and/or rotated relative to the objective and to the diverting apparatus (5), or
b. is positioned in an optical medium, or
c. is positioned in a sample chamber (14), or
d. is positioned in a capillary, or
e. is positioned on a pedestal, or
f. is positioned in a sample chamber filled with an optical medium surrounding the sample.

6. Method according to one of Claims 1 to 5, **characterized in that**
a. the light beam (1) is directed, as a divergent light beam (1), onto the objective (4), and/or **in that**
b. the light beam (1) is influenced by using an additional optical unit that acts only on the light beam (1) but not on the detection light, and/or **in that**
c. an extension of the detection beam path is effected.

7. Method according to one of Claims 1 to 6, **characterized in that**,
a. for increasing the optical resolution, at least one stimulation light beam or a stimulation strip of light is superposed on the strip of light (2) according to the principle of STED (stimulated emission depletion) microscopy in a manner such that the region of the sample (7) from which the light to be detected for producing an image is emitted is smaller than the region of the sample that is illuminated by the strip of light, or **in that**
b. for increasing the optical resolution, at least one stimulation strip of light is superposed on the strip of light (2) according to the principle of STED (stimulated emission depletion) microscopy, wherein the strip of light (2) and the stimulation strip of light partially overlap and are aligned parallel to one another.

8. Microscopy method, **characterized in that**
a. a sample (7) is illuminated according to a method according to one of Claims 1 to 7, or **in that**
b. a plurality of samples (7) are arranged together on an object stage or on a slide and one sample after the other is examined under the microscope, wherein each sample is illuminated according to a method according to one of Claims 1 to 7.

9. Apparatus for illuminating a sample in SPIM microscopy,
a. having a light source (8) for producing a light beam (1),
b. having means (3) for producing a strip of light (2) from the light beam (1) for substantially surface-type illumination of a sample in an illumination plane from at least one direction, and having at least one objective (4) having an optical unit (4.2), **characterized in that**
c. the optical unit (4.2) is configured and intended for guiding detection light (10) coming from the sample (7) directly or indirectly to a detector (11), wherein the optical unit (4.2) of the objective (4) interacts with the strip of light (2),
d. and having a diverting apparatus (5), connected downstream of the optical unit (4.2) of the objective (4), for diverting the strip of light (2), wherein the strip of light (2), for illuminating a sample (7), propagates after the diversion at an angle that differs from zero degrees with respect to the optical axis of the objective (4) and/or is arranged in a plane that is non-parallel with respect to the optical axis of the objective (4) .

10. Apparatus according to Claim 9, **characterized in that**
a. the optical means (3) for producing the strip of light (2) has at least one beam deflection apparatus, or **in that**
b. the optical means (3) for producing the strip of light (2) has at least one beam deflection apparatus embodied in the form of a beam deflection device of a scanning microscope or of a confocal scanning microscope, or **in that**
c. the optical means (3) for producing the strip of light (2) has at least one beam deflection apparatus (6), wherein the beam deflection apparatus has at least one of the following elements: a rotating mirror or a tilting mirror (6.1) or a galvanometer mirror or a rotary prism or a displaceable lens or an acousto-optic deflector, or **in that**
d. the optical means (3) for producing the strip of light (2) has at least one cylindrical optical unit (13), or **in that**
e. the objective (4) is an immersion objective, or **in that**
f. the objective (4) is an immersion objective and **in that** the objective (4) is configured and intended for being immersed in a sample chamber (14), or in a sample vessel, filled with an optical medium surrounding a sample (7) that is to be illuminated.

11. Apparatus according to Claim 9 or 10, **characterized in that** the apparatus has a further objective or a condenser optical unit for directly or indirectly guiding the detection light (10) coming from the sample (7) to the detector (11).

12. Apparatus according to one of Claims 9 to 11, **characterized in that**
a. the diverting apparatus (5) is attachable or attached to the objective (4) or the further objective or the condenser optical unit, or **in that**
b. the diverting apparatus (5) is held on the objective (4) or the further objective or the condenser optical unit such that it is displaceable counter to the force of an elastic element, or **in that**
c. the diverting apparatus (5) is held on the objective (4) or the further objective or the condenser optical unit such that it is displaceable counter to the force of an elastic element at an angle that differs from 90° with respect to the optical axis of the objective, or **in that**
d. the diverting apparatus (5) has a connecting means in a manner such that the diverting apparatus is attachable as a retrofit component to the objective or to another objective, and/or **in that**
e. at least one component of the diverting apparatus (5) is produced in one piece with a component of the objective or a component of the further objective or a component of the condenser optical unit, or **in that**
f. the diverting apparatus (5) for diverting the strip of light (2) has at least one at least partially reflective surface, or **in that**
g. the diverting apparatus (5) for diverting the strip of light (2) has at least one at least partially reflective surface, wherein the reflective surface is embodied to be part of a plane mirror, or **in that**
h. the diverting apparatus (5) for diverting the strip of light (2) has at least one at least partially reflective surface, wherein the reflective surface is formed at least partially on the inside of a cone, and/or **in that**
i. a sample (7) is illuminable with the strip of light from at least two directions, wherein the strip of light is focusable in a single focusing region in the sample, or **in that**
j. a sample (7) is illuminable with the strip of light radially from all directions of a plane, wherein the strip of light from each of the directions of the plane is focusable in a single focusing region in the sample, or **in that**
k. the sample (7) is illuminable from at least two directions by changing the irradiation direction, or **in that**
l. the sample (7) is illuminable from at least two directions by changing the irradiation direction with the aid of the diverting apparatus (5) and/or the optical means for producing the strip of light, or **in that**
m. the sample (7) is illuminable with the strip of light radially from all directions of a plane by rotating the irradiation direction.

13. Apparatus according to one of Claims 9 to 12, **characterized in that**
a. the light beam (1) is incident on the objective (4) as a divergent light beam, and/or **in that**
b. the light beam (1) traverses an additional optical unit that acts only on the light beam (1) but not on the detection light, and/or **in that**
c. the apparatus has an extended detection beam path.

14. Apparatus according to one of Claims 9 to 13, **characterized in that**,
a. for increasing the optical resolution, at least one stimulation light beam and/or a stimulation strip of light is superposed on the strip of light (2) according to the principle of STED (stimulated emission depletion) microscopy in a manner such that the region of the sample (7) from which the light to be detected for producing an image is smaller than the region of the sample that is illuminated by the strip of light, or **in that**
b. for increasing the optical resolution, at least one stimulation strip of light is superposed on the strip of light (2) according to the principle of STED (stimulated emission depletion) microscopy, wherein the strip of light (2) and the stimulation strip of light partially overlap and are aligned parallel to one another.

15. Microscopy or experimental setup for imaging a sample by way of microscopy, **characterized in that**
a. an apparatus for illumination according to one of Claims 9 to 14 or for performing a method according to one of Claims 1 to 8 is present, or **in that**
b. an apparatus for illumination according to one of Claims 9 to 14 or for performing a method according to one of Claims 1 to 8 is present, wherein an apparatus for displacing and/or rotating a sample relative to the objective (4) and to the diverting apparatus (5) is provided, or wherein the sample is positionable in an optical medium, or wherein a sample chamber or a capillary or a sample pan for one or more samples is provided, or wherein at least one pedestal on which a sample is positionable or positioned is provided.

## Revendications

1. Procédé destiné à l'éclairage d'au moins un échantillon en microscopie SPIM comprenant les étapes suivantes :
a. générer un faisceau lumineux (1),
b. générer une bande lumineuse (2) à partir du faisceau lumineux (1) à l'aide d'un moyen optique (3) entrant en interaction avec le faisceau lumineux (1),
**caractérisé par** les étapes supplémentaires suivantes :
c. guider la bande lumineuse (2) à travers au moins un objectif (4) comprenant une optique (4.2) qui est réalisée et conçue pour délivrer directement ou indirectement à un détecteur (11) une lumière de détection (10) provenant de l'échantillon (7), dans lequel l'optique (4.2) de l'objectif (4) entre en interaction avec la bande lumineuse (2), et
d. dévier la bande lumineuse (2) à l'aide d'un dispositif de déviation (5) monté en aval de l'optique (4.2) de l'objectif (4) de telle sorte que la bande lumineuse (2) se propage après déviation de manière à ce qu'elle éclaire l'échantillon (7) sous un angle différent de zéro degré par rapport à l'axe optique de l'objectif (4) .

2. Procédé selon la revendication 1, **caractérisé en ce que**
a. le moyen optique (3) destiné à générer la bande lumineuse (2) comporte au moins un dispositif de déviation de faisceau ou **en ce que**
b. le moyen optique destiné à générer la bande lumineuse comporte au moins un dispositif de déviation de faisceau (6) qui est réalisé sous la forme d'un dispositif de déviation de faisceau d'un microscope à balayage ou d'un microscope à balayage confocal ou **en ce que**
c. le moyen optique (3) destiné à générer la bande lumineuse (2) comporte au moins un dispositif de déviation de faisceau (6), dans lequel le dispositif de déviation de faisceau comporte au moins l'un des éléments suivants : un miroir tournant ou un miroir basculant (6.1) ou un miroir galvanométrique ou un prisme tournant ou une lentille mobile ou un déflecteur acousto-optique ou **en ce que**
d. le moyen optique (3) destiné à générer la bande lumineuse (2) comporte au moins une optique cylindrique (13) ou **en ce que**
e. la bande lumineuse (2) est focalisée dans l'échantillon après déviation.

3. Procédé selon l'une des revendications 1 ou 2, **caractérisé en ce que**
a. l'objectif (4) est un objectif à immersion ou **en ce que** l'objectif (4) est un objectif à immersion et est immergé dans une chambre à échantillon (14) ou dans un récipient à échantillon rempli d'un milieu optique entourant l'échantillon (7) ou **en ce que**
b. un échantillon (7) à éclairer est positionné dans une chambre à échantillon ou dans un récipient à échantillon rempli d'un milieu optique entourant l'échantillon (7), et **en ce que** le dispositif de déviation est immergé dans le milieu ou est disposé dans le milieu ou **en ce que**
c. l'objectif (4) est utilisé pour éclairer l'échantillon (7) et/ou pour délivrer directement ou indirectement au détecteur (11) la lumière de détection (10) provenant de l'échantillon (7), et/ou **en ce que**
d. un autre objectif ou une optique de condenseur est utilisé pour délivrer directement ou indirectement au détecteur (11) la lumière de détection de l'échantillon ou **en ce que**
e. l'objectif (4) ou le dispositif de déviation (5) est immergé dans la chambre à échantillon (14) et/ou dans le milieu optique ou **en ce que**
f. l'objectif (4) ou le dispositif de déviation (5) est disposé dans la chambre à échantillon (14) et/ou dans le milieu optique ou **en ce que**
g. le dispositif de déviation (5) est fixé à l'objectif (4) ou à l'autre objectif ou à l'optique de condenseur (18) et/ou **en ce que**
h. le dispositif de déviation (5) est maintenu de manière déplaçable sur l'objectif (4) et/ou l'autre objectif ou sur l'optique de condenseur contre la force d'un élément élastique ou **en ce que**
i. le dispositif de déviation (5) est maintenu de manière déplaçable sur l'objectif (4) ou l'autre objectif ou sur l'optique de condenseur contre la force d'un élément élastique sous un angle différent de 90° par rapport à l'axe optique de l'objectif (4) ou **en ce que**
j. le dispositif de déviation (5) comporte au moins un moyen de liaison tel que le dispositif de déviation soit fixé ou puisse être fixé en tant que composant de mise à niveau à l'objectif (4) ou à l'autre objectif ou au condenseur ou **en ce que**
k. au moins un composant du dispositif de déviation (5) est produit en une seule pièce à l'aide d'un composant de l'objectif (4) ou d'un composant de l'autre objectif ou d'un composant de l'optique de condenseur.

4. Procédé selon l'une des revendications 1 à 3, **caractérisé en ce que**
a. l'échantillon (7) est éclairé dans au moins deux directions par la bande lumineuse (2), dans lequel la bande lumineuse (2) est focalisée dans une zone focale unique de l'échantillon (7) ou **en ce que**
b. l'échantillon (7) est éclairé radialement par la bande lumineuse (2) dans toutes les directions d'un plan, dans lequel la bande lumineuse (2) est focalisée dans une zone focale unique de l'échantillon (7) ou **en ce que**
c. l'échantillon (7) est éclairé en modifiant la direction d'irradiation dans au moins deux directions ou **en ce que**
d. l'échantillon (7) est éclairé dans au moins deux directions en modifiant la direction d'irradiation à l'aide du dispositif de déviation ou du moyen optique destiné à générer la bande lumineuse (2) ou **en ce que**
e. l'échantillon (7) est éclairé par la bande lumineuse en faisant tourner la direction d'irradiation radialement dans toutes les directions d'un plan ou **en ce que**
f. l'échantillon (7) est éclairé radialement dans toutes les directions d'un plan par la bande lumineuse en faisant tourner la direction d'irradiation à l'aide du dispositif de déviation ou du moyen optique destiné à générer la bande lumineuse.

5. Procédé selon l'une des revendications 1 à 4, **caractérisé en ce que**, pour la microscopie SPIM, l'échantillon
a. est décalé et/ou amené à tourner vers l'objectif et le dispositif de déviation (5) ou
b. est positionné dans un milieu optique ou
c. est positionné dans une chambre à échantillon (14) ou
d. est positionné dans un tube capillaire ou
e. est positionné sur un socle ou
f. est positionné dans une chambre à échantillon remplie d'un milieu optique entourant l'échantillon.

6. Procédé selon l'une des revendications 1 à 5, **caractérisé en ce que**
a. le faisceau lumineux (1) est dirigé sous la forme d'un faisceau lumineux divergent (1) vers l'objectif (4) et/ou **en ce que**
b. le faisceau lumineux (1) est soumis à l'effet d'une optique supplémentaire qui agit exclusivement sur le faisceau lumineux (1) mais pas sur celui de la lumière de détection et/ou **en ce que**
c. un allongement du trajet du faisceau de détection est effectué.

7. Procédé selon l'une des revendications 1 à 6, **caractérisé en ce que**
a. au moins un faisceau lumineux de stimulation ou une bande lumineuse de stimulation est superposé à la bande lumineuse (2) pour augmenter la résolution optique selon le principe de la microscopie STED (Stimulated Emission Depletion) de manière à ce que la zone de l'échantillon (7) d'où la lumière à détecter pour générer une image est émise soit plus petite que la zone de l'échantillon qui est éclairée par la bande lumineuse ou **en ce que**
b. au moins une bande lumineuse de stimulation est superposée à la bande lumineuse (2) pour augmenter la résolution optique selon le principe de la microscopie STED (Stimulated Emission Depletion), dans lequel la bande lumineuse (2) et la bande lumineuse de stimulation se chevauchent partiellement et sont orientées parallèlement l'une à l'autre.

8. Procédé de microscopie, **caractérisé en ce que** a. un échantillon (7) est éclairé par un procédé selon l'une des revendications 1 à 7 ou **en ce que** b. plusieurs échantillons (7) sont disposés ensemble sur une platine de microscope ou sur une lame de microscope et un échantillon après l'autre est examiné au microscope, dans lequel chaque échantillon est éclairé par un procédé selon l'une des revendications 1 à 7.

9. Dispositif destiné à l'éclairage d'un échantillon en microscopie SPIM,
a. comprenant une source lumineuse (8) destinée à générer un faisceau lumineux (1),
b. comprenant des moyens (3) destinés à générer une bande lumineuse (2) à partir du faisceau lumineux (1) pour éclairer un échantillon d'une manière sensiblement plane dans un plan d'éclairage dans au moins une direction, et comprenant au moins un objectif (4) qui comporte une optique (4.2),
**caractérisé en ce que**
c. l'optique (4.2) est réalisée et conçue pour délivrer directement ou indirectement à un détecteur (11) une lumière de détection (10) provenant de l'échantillon (7), dans lequel l'optique (4.2) de l'objectif (4) entre en interaction avec la bande lumineuse (2),
d. et comportant un dispositif de déviation (5), monté en aval de l'optique (4.2) de l'objectif (4), pour dévier la bande lumineuse (2), dans lequel la bande lumineuse (2) se propage après déviation de manière à ce qu'elle éclaire l'échantillon (7) sous un angle différent de zéro degré par rapport à l'axe optique de l'objectif (4) et/ou à ce qu'elle soit disposée dans un plan non parallèle à l'axe optique de l'objectif (4).

10. Dispositif selon la revendication 9, **caractérisé en ce que**
a. le moyen optique (3) destiné à générer la bande lumineuse (2) comporte au moins un dispositif de déviation de faisceau ou **en ce que**
b. le moyen optique (3) destiné à générer la bande lumineuse (2) comporte au moins un dispositif de déviation de faisceau qui est réalisé sous la forme d'un dispositif de déviation de faisceau d'un microscope à balayage ou d'un microscope à balayage confocal ou **en ce que**
c. le moyen optique (3) destiné à générer la bande lumineuse (2) comporte au moins un dispositif de déviation de faisceau (6), dans lequel le dispositif de déviation de faisceau comporte au moins l'un des éléments suivants : un miroir tournant ou un miroir basculant (6.1) ou un miroir galvanométrique ou un prisme tournant ou une lentille mobile ou un déflecteur acousto-optique ou **en ce que**
d. le moyen optique (3) destiné à générer la bande lumineuse (2) comporte au moins une optique cylindrique (13) ou **en ce que**
e. l'objectif (4) est un objectif à immersion ou **en ce que**
f. l'objectif (4) est un objectif à immersion et **en ce que** l'objectif (4) est réalisé et conçu pour être immergé dans une chambre à échantillon (14) ou dans un récipient à échantillon rempli d'un milieu optique entourant un échantillon (7) à éclairer.

11. Dispositif selon la revendication 9 ou 10, **caractérisé en ce que** le dispositif comporte un autre objectif ou une optique de condenseur pour délivrer directement ou indirectement au détecteur (11) la lumière de détection (10) provenant de l'échantillon (7) .

12. Dispositif selon l'une des revendications 9 à 11, **caractérisé en ce que**
a. le dispositif de déviation (5) peut être fixé ou est fixé à l'objectif (4) ou à l'autre objectif ou à l'optique de condenseur ou **en ce que**
b. le dispositif de déviation (5) est maintenu de manière déplaçable sur l'objectif (4) ou l'autre objectif ou sur l'optique de condenseur contre la force d'un élément élastique ou **en ce que**
c. le dispositif de déviation (5) est maintenu de manière déplaçable sur l'objectif (4) ou l'autre objectif ou sur l'optique de condenseur contre la force d'un élément élastique sous un angle différent de 90° par rapport à l'axe optique de l'objectif ou **en ce que**
d. le dispositif de déviation (5) comporte un moyen de liaison tel que le dispositif de déviation puisse être fixé en tant que composant de mise à niveau à l'objectif ou à un autre objectif et/ou **en ce que**
e. au moins un composant du dispositif de déviation (5) est produit en une seule pièce à l'aide d'un composant de l'objectif ou d'un composant de l'autre objectif ou d'un composant de l'optique de l'optique de condenseur ou **en ce que**
f. le dispositif de déviation (5) destiné à dévier la bande lumineuse (2) comporte au moins une surface au moins partiellement réfléchissante ou **en ce que**
g. le dispositif de déviation (5) destiné à dévier la bande lumineuse (2) comporte au moins une surface au moins partiellement réfléchissante, dans lequel la surface réfléchissante est réalisée en tant que partie d'un miroir plan ou **en ce que**
h. le dispositif de déviation (5) destiné à dévier la bande lumineuse (2) comporte au moins une surface au moins partiellement réfléchissante, dans lequel la surface réfléchissante est réalisée au moins partiellement sur la face intérieure d'un cône et/ou **en ce que**
i. un échantillon (7) peut être éclairé par la bande lumineuse dans au moins deux directions, dans lequel la bande lumineuse peut être focalisée dans une zone focale unique de l'échantillon ou **en ce que**
j. un échantillon (7) peut être éclairé radialement par la bande lumineuse dans toutes les directions d'un plan, dans lequel la bande lumineuse peut être focalisée dans une zone focale unique de l'échantillon dans chacune des directions du plan ou **en ce que**
k. l'échantillon (7) peut être éclairé dans au moins deux directions en modifiant la direction d'irradiation ou **en ce que**
l. l'échantillon (7) peut être éclairé dans au moins deux directions en modifiant la direction d'irradiation à l'aide du dispositif de déviation (5) et/ou du moyen optique destiné à générer la bande lumineuse ou **en ce que**
m. l'échantillon (7) peut être éclairé par la bande lumineuse en faisant tourner la direction d'irradiation radialement dans toutes les directions d'un plan.

13. Dispositif selon l'une des revendications 9 à 12, **caractérisé en ce que**
a. le faisceau lumineux (1) est incident sur l'objectif (4) sous la forme d'un faisceau lumineux divergent, et/ou **en ce que**
b. le faisceau lumineux (1) passe à travers une optique supplémentaire qui agit exclusivement sur le faisceau lumineux (1), mais pas sur celui de la lumière de détection et/ou **en ce que**
c. le dispositif comporte un trajet de faisceau de détection allongé.

14. Dispositif selon l'une des revendications 9 à 13, **caractérisé en ce que**
a. au moins un faisceau lumineux de stimulation et/ou une bande lumineuse de stimulation est superposé à la bande lumineuse (2) pour augmenter la résolution optique selon le principe de la microscopie STED (Stimulated Emission Depletion) de manière à ce que la zone de l'échantillon (7) d'où la lumière à détecter pour générer une image soit plus petite que la zone de l'échantillon qui est éclairée par la bande lumineuse ou **en ce que**
b. au moins une bande lumineuse de stimulation est superposée à la bande lumineuse (2) pour augmenter la résolution optique selon le principe de la microscopie STED (Stimulated Emission Depletion), dans lequel la bande lumineuse (2) et la bande lumineuse de stimulation se chevauchent partiellement et sont orientées parallèlement l'une à l'autre.

15. Microscope ou montage expérimental pour l'imagerie microscopique d'un échantillon, **caractérisé en ce que**
a. il est prévu un dispositif d'éclairage selon l'une des revendications 9 à 14 ou destiné à la mise en œuvre d'un procédé selon l'une des revendications 1 à 8 ou **en ce que**
b. il est prévu un dispositif d'éclairage selon l'une des revendications 9 à 14 ou destiné à la mise en œuvre d'un procédé selon l'une des revendications 1 à 8, dans lequel il est prévu un dispositif pour déplacer et/ou faire tourner un échantillon par rapport à l'objectif (4) et au dispositif de déviation (5) ou dans lequel l'échantillon peut être positionné dans un milieu optique ou dans lequel il est prévu une chambre à échantillon ou un tube capillaire ou une coupelle à échantillon pour un ou plusieurs échantillons ou dans lequel il est prévu au moins un socle sur lequel un échantillon peut être positionné ou est positionné.
